# EUROPEAN PATENT APPLICATION

(11) **EP 2 472 545 A1**
(43) Date of publication of application: **04.07.2012**
(21) Application number: 10811816.7
(22) Date of filing: 23.08.2010
(51) Int. Cl.: H01H 19/00, A45D 20/10, B05B 5/053, B05B 5/057

(54) **DISCHARGE DEVICE AND ELECTROSTATIC ATOMIZATION DEVICE COMPRISING SAME**

(30) Priority: 26.08.2009 JP 2009195359; 18.09.2009 JP 2009217741; 18.09.2009 JP 2009217742; 24.09.2009 JP 2009219728; 24.09.2009 JP 2009219729; 25.09.2009 JP 2009221335
(71) Applicant: Panasonic Corporation, Osaka 571-8501 (JP)
(72) Inventor: NUNOMURA, Mahito, Osaka 540-6207 (JP); SUDA, Hiroshi, Osaka 540-6207 (JP); MISHIMA, Yukiko, Osaka 540-6207 (JP); MACHI, Masaharu, Osaka 540-6207 (JP); OE, Junpei, Osaka 540-6207 (JP); KOMURA, Yasuhiro, Osaka 540-6207 (JP); ASANO, Yukiyasu, Osaka 540-6207 (JP); KITAMURA, Hiroyasu, Osaka 540-6207 (JP); IZUMI, Tomohiro, Osaka 540-6207 (JP)
(74) Representative: Appelt, Christian W.
(86) International application number: PCT/JP2010/064203
(87) International publication number: WO 2011/024766

(57) **Abstract**

Disclosed is a discharge device (20) which comprises a power supply unit (22) that supplies a first voltage, a piezoelectric transducer (24) that increases the first voltage to a second voltage by means of vibrations, and a first electrode (26) for producing a discharge product (P) by performing a discharge upon application of the second voltage. The first electrode (26) and the piezoelectric transducer (24) are electrically connected with each other via a vibration damping unit (30). In other words, the first electrode (26) and the piezoelectric transducer (24) are arranged to be out of contact with each other.

## Description

### TECHNICAL FIELD

The present invention relates to a discharge device and an electrostatic atomization device including the discharge device.

### BACKGROUND ART

In recent years, discharge devices have been widely applied to various products. For example, discharge devices are built into air conditioners as ion generators that are discharged to emit negative ions. As another example, discharge devices are also used as metal microparticle generators that emit metal microparticles by sputtering a metal electrode with discharge ions. Patent Document 1 describes hair drier including such a metal microparticle generator that decomposes reactive oxygen, which is generated by ultraviolet rays, with an antioxidative effect produced by platinum microparticles in order to reduce damage to hair. In addition, as described in Patent Document 2, a discharge device is also used as an electrostatic atomization device that generates mist containing charged microparticles by electrostatically atomizing a liquid. Due to charging, charged microparticle mist is drawn to and collects on an object and produces effects such as deodorization and sterilization through the action of radicals contained in the charged microparticle mist. Recently, such charged microparticle mists have been attracting attention in terms of having beneficial effects on health and beauty. In this manner, depending on its application, a discharge device generates discharge ions, metal microparticles, or an ion mist (charged atomized liquid).

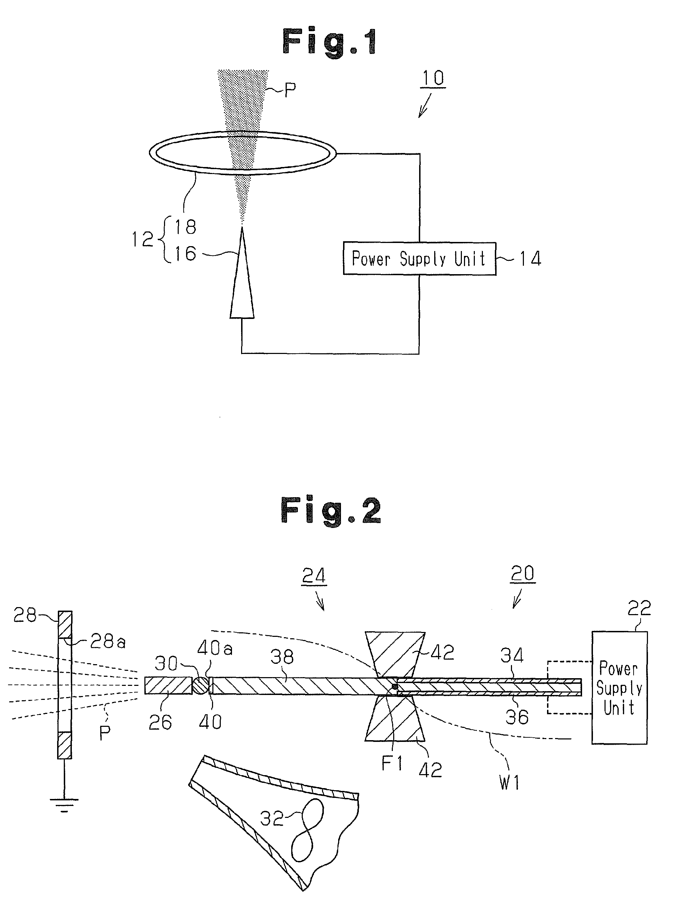

Fig. 1 shows a conventional discharge device 10. The discharge device 10 includes a discharge unit 12, which is discharged to generate a discharge product P such as ions, metal microparticles, or an ion mist, and a power supply unit 14, which supplies power to the discharge unit 12. Generally, the discharge unit 12 includes a discharge electrode 16 provided with a pointed distal portion, and an opposing electrode 18, which is arranged separated from the discharge electrode 16, and generates the discharge product P in accordance with a voltage applied between the electrodes 16 and 18 by the power supply unit 14. When generating metal microparticles as the discharge product P, a metallic material such as platinum is used for the discharge electrode 16. In an electrostatic atomization device, a liquid such as water is supplied to the discharge electrode 16 and an ion mist is generated as the discharge product P.

In the discharge device 10, a high voltage must be applied between the electrodes 16 and 18. However, since the voltage applied from the power supply unit 14 is only several kilovolts, there are cases in which sufficient discharge cannot be performed. A conventional method increases the voltage applied between the electrodes 16 and 18 by using a high-voltage transformer, namely, a winding transformer, which includes windings and an iron core. However, since such a winding transformer has a large size, a large space is required to install a discharge device. Accordingly, Patent Document 3 describes the use of a piezoelectric oscillator that oscillates to increase the voltage, in other words, a so-called piezoelectric transformer in place of a winding transformer.

### PRIOR ART DOCUMENT

Patent Document 1: Japanese Laid-Open Patent Publication No. 2008-23063
Patent Document 2: Japanese Laid-Open Patent Publication No. 2007-313460
Patent Document 3: Japanese Laid-Open Patent Publication No. 6-243952

### DISCLOSURE OF THE INVENTION

A piezoelectric oscillator can reduce the size of a discharge device as compared to a winding transformer. However, a piezoelectric oscillator has a drawback in that mechanical oscillation (ultrasonic oscillation) is generated. For example, with the structure described in Patent Document 3, oscillation from a piezoelectric element is transmitted to a corona discharger, which is connected to an output electrode of the piezoelectric element. Accordingly, the conventional discharge device, cannot stably and efficiently generate a discharge product due to the oscillation of the piezoelectric oscillator.

The present invention provides a discharge device capable of stably and efficiently generating a discharge product by suppressing oscillation of a piezoelectric oscillator and an electrostatic atomization device including such a discharge device.

One embodiment of the present invention is a discharge device. The discharge device includes a power supply unit that supplies a first voltage, a piezoelectric oscillator that oscillates to increase the first voltage to a second voltage, and a first electrode that performs discharging based on the second voltage to generate a discharge product. The first electrode and the piezoelectric oscillator are arranged out of contact with each other. In this structure, the discharge device suppresses the oscillation of the piezoelectric oscillator and generates the discharge product stably and efficiently. The first electrode and the piezoelectric oscillator being arranged out of contact with each other includes the piezoelectric oscillator being electrically connected to the second electrode, which is arranged spaced apart from the first electrode, and the piezoelectric oscillator being electrically connected to the first electrode via an oscillation attenuation unit. The discharge device can be applied to a metal microparticle generator and to an electrostatic atomization device.

### BRIEF DESCRIPTION OF THE DRAWINGS

Fig. 1 is a schematic diagram showing a conventional discharge device;
Fig. 2 is a schematic partial cross-section showing a discharge device serving as a metal microparticle generator;
Figs. 3(a) and 3(b) are schematic diagrams showing a piezoelectric oscillator in the discharge device of Fig. 2;
Fig. 4 is a waveform diagram of an input/output voltage for the piezoelectric oscillator shown in Fig. 3;
Fig. 5 is a schematic front view showing an opposing electrode arranged in the discharge device shown in Fig. 2;
Fig. 6(a) is a schematic perspective view showing another discharge electrode, and Fig. 6(b) is a schematic perspective view showing another contact member and another discharge electrode;
Figs. 7(a) to 7(c) are schematic perspective views showing other contact members and discharge electrodes;
Fig. 8 is a schematic partial cross-section showing a discharge device serving as an electrostatic atomization device;
Figs. 9(a) to 9(c) are schematic side views showing other discharge electrodes;
Fig. 10 is a schematic side view showing another liquid supplying unit;
Fig. 11 is a schematic side view showing another contact member;
Figs. 12(a) to 12(c) are schematic diagrams showing other piezoelectric oscillators;
Figs. 13(a) and 13(b) are schematic diagrams showing the shapes of a second electrode;
Fig. 14 is a schematic diagram showing another piezoelectric oscillator oscillates in a standing wave having a wavelength of λ;
Fig. 15 is a schematic partial cross-section showing a discharge device serving as an electrostatic atomization device;
Fig. 16 is a schematic partial cross-section showing a discharge device serving as an electrostatic atomization device;
Fig. 17 is a schematic partial cross-section showing a discharge device serving as an electrostatic atomization device;
Fig. 18 is a schematic partial cross-section showing an embodiment using a plurality of discharge electrodes in the discharge device of Fig. 15;
Fig. 19 is a schematic partial cross-section showing a discharge device serving as an electrostatic atomization device;
Fig. 20 is a partial front view of an opposing electrode;
Fig. 21 is a schematic partial cross-section showing a discharge device serving as an electrostatic atomization device;
Fig. 22 is a schematic partial cross-section showing a discharge device serving as an electrostatic atomization device;
Fig. 23 is a partial front view of another opposing electrode;
Fig. 24(a) is a schematic partial cross-section of a discharge device serving as an electrostatic atomization device, and Fig. 24(b) is a schematic diagram of a discharge electrode arranged in the discharge device shown in Fig. 24(a) to produces a capillary phenomenon;
Fig. 25 is a schematic partial cross-section showing an electrostatic atomization device including a liquid supply detector;
Fig. 26 is a schematic partial cross-section showing a discharge device serving as an electrostatic atomization device;
Fig. 27 is a schematic partial cross-section showing a discharge device serving as an electrostatic atomization device;
Fig. 28 is a schematic diagram showing a plurality of discharge electrodes arranged in the discharge device shown in Fig. 27;
Fig. 29 is a schematic partial cross-section showing a discharge device serving as an electrostatic atomization device;
Fig. 30 is a schematic diagram showing a secondary electrode (piezoelectric oscillator) arranged in the discharge device shown in Fig. 29;
Fig. 31 is a schematic partial cross-section showing a discharge device serving as an electrostatic atomization device;
Figs. 32(a) to 32(e) are schematic diagrams showing various examples of an opposing electrode;
Figs. 33(a) and 33(b) are schematic diagrams showing various examples of a discharge electrode;
Figs. 34(a) to 34(c) are schematic diagrams showing various examples of a discharge electrode;
Fig. 35 is a schematic partial cross-section showing the structure of a discharge device including another piezoelectric oscillator; and
Fig. 36 is a schematic perspective view of the piezoelectric oscillator (discharge device) shown in Fig. 35.

### EMBODIMENTS OF THE INVENTION

### First Embodiment

A discharge device 20 according to a first embodiment will now be described with reference to Figs. 2 to 5. For example, the discharge device 20 according to the first embodiment is applied to a metal microparticle generator installed in a hair drier to generate metal microparticles as a discharge product P.

As shown in Fig. 2, the discharge device 20 includes a power supply unit 22, which supplies a first voltage (e.g., an AC voltage from a commercial power supply) as power, a piezoelectric oscillator 24 (i.e., a piezoelectric transformer) that oscillates to increase the first voltage to a second voltage (AC voltage), and a discharge electrode 26, which serves as a first electrode that performs discharging upon application of the increased second voltage.

The discharge device 20 further includes an opposing electrode 28, which serves as a second electrode that is spaced apart from the discharge electrode 26. The second voltage is applied between the opposing electrode 28 and the discharge electrode 26. The opposing electrode 28 is useful in providing directivity to a scattering direction of metal microparticles emitted as the discharge product P when discharging occurs between the discharge electrode 26 and the opposing electrode 26. However, the opposing electrode 28 is not essential and another member such as a housing may be used as an electrode. While the opposing electrode 28 is connected to ground in the first embodiment, the opposing electrode 28 may alternatively be set to a predetermined potential other than ground.

The discharge device 20 further includes a contact member 30, which is arranged between the discharge electrode 26 and the piezoelectric oscillator 24 and serves as an oscillation attenuation unit that electrically connects the discharge electrode 26 and the piezoelectric oscillator 24. In other words, the discharge electrode 26 and the piezoelectric oscillator 24 are out of contact with each other. The piezoelectric oscillator 24, the contact member 30, the discharge electrode 26, and the opposing electrode 28 are arranged inside a housing (not shown). As described earlier, the housing may be used in place of the opposing electrode 28. The discharge device 20 further includes a fan 32 serving as an air blower. The specific structure of the discharge device 20 will now be described.

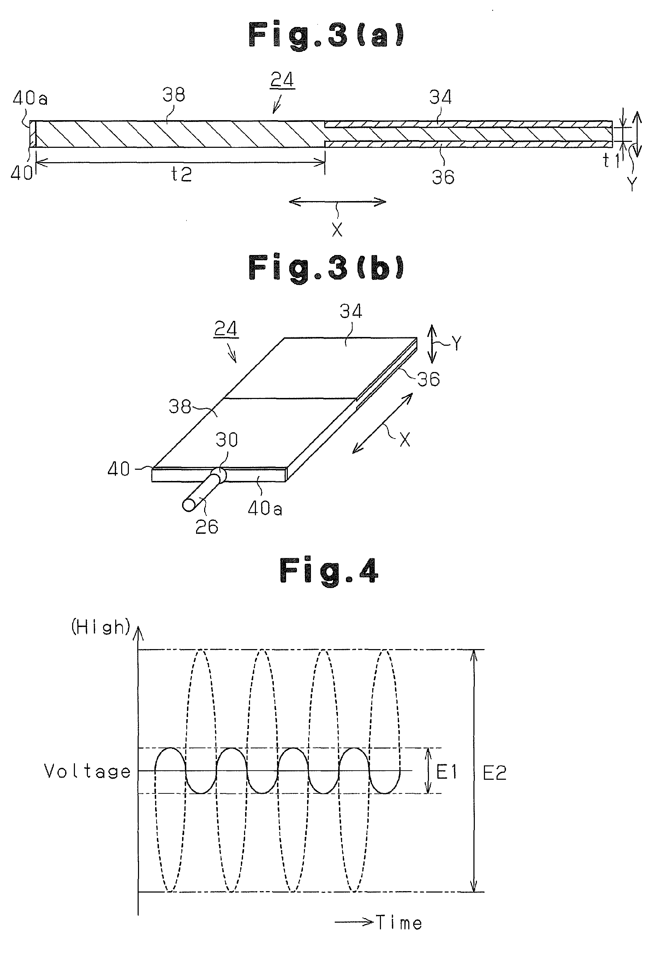

As shown in Figs. 3(a) and 3(b), the piezoelectric oscillator 24 includes primary electrodes 34 and 36, which are supplied with a first voltage from the power supply unit 22, a piezoelectric body 38, which oscillates in accordance with the first voltage applied to the primary electrodes 34 and 36, and a secondary electrode 40, which outputs a second voltage that is increased from the first voltage by oscillation of the piezoelectric body 38. The piezoelectric body 38, for example, has the shape of tetragonal plate and is formed from a lead zirconate titanate (PZT) based material.

The piezoelectric body 38 is configured to polarize in two directions, namely, a longitudinal direction (the direction denoted by an arrow X in Fig. 3) and a thickness direction (the direction denoted by arrow Y in Fig. 3). The primary electrodes 34 and 36 are arranged on the two surfaces in the thickness direction of the piezoelectric body 38 at one longitudinal side of the piezoelectric body 38. The primary electrodes 34 and 36 respectively function as power supply surfaces that supply power to the piezoelectric body 38. The secondary electrode 40 is arranged on an end surface on the other longitudinal side of the piezoelectric body 38. The secondary electrode 40 includes a high-voltage output surface 40a that outputs voltage increased by the piezoelectric body 38. The high-voltage output surface 40a is preferably coated by gold plating or the like formed from an acid-resistant material. The coating functions as a protective material of the high-voltage output surface 40a and enhances resistance of the secondary electrode 40 to acid, high voltage, and strong mechanical oscillation.

In the piezoelectric oscillator 24, a thickness t1 in the thickness direction (a first polarization direction) of the piezoelectric body 38 at a portion between the primary electrodes 34 and 36 is set to be smaller than a length t2 in the longitudinal direction (second polarization direction) of the piezoelectric body 38 from the primary electrodes 34 and 36 to the secondary electrode 40 (t1 < t2). The dimensional ratio (t2/t1) is substantially equivalent to an amplification ratio of an output voltage (second voltage) to an input voltage (first voltage). For example, the amplification ratio is set to be around ten to twenty. A greater amplification ratio results in an output voltage of 20 kV or higher and may result in difficult controlling.

As shown in Fig. 2, the primary electrodes 34 and 36 of the piezoelectric oscillator 24 are electrically connected to the power supply unit 22, which supplies the first voltage (AC voltage). In other words, the AC voltage from the power supply unit 22 is applied between the primary electrodes 34 and 36. The power supply unit 22 applies an AC voltage having a resonant frequency corresponding to a length (length in the X direction) of the piezoelectric oscillator 24 to the primary electrodes 34 and 36. The secondary electrode 40 of the piezoelectric oscillator 24 is in contact with the contact member 30 and is electrically connected to the discharge electrode 26 via the contact member 30.

When AC voltage is applied to the primary electrodes 34 and 36 by the power supply unit 22, a strong mechanical oscillation occurs in the longitudinal direction (X direction) of the piezoelectric oscillator 24. Here, as depicted by a two-dot chain line in Fig. 2, the piezoelectric oscillator 24 oscillates in a standing wave W1 having a wavelength of λ/2 (standing wave mode). In this case, λ/2 corresponds to a longitudinal dimension of the piezoelectric oscillator 24. The standing wave W1 is fundamentally a longitudinal wave oscillation but shown as a transverse wave in Fig. 2 for ease of description.

The piezoelectric oscillator 24 produces a piezoelectric effect due to the mechanical oscillation described above and generates an electrical charge on the high-voltage output surface 40a of the secondary electrode 40. As a result, as shown in Fig. 4, a second voltage E2 that is higher than a first voltage E1 applied to the primary electrodes 34 and 36 by the power supply unit 22 is output to the high-voltage output surface 40a of the secondary electrode 40.

The contact member 30, which serves as an oscillation attenuation unit, is electrically connected between the high-voltage output surface 40a and the discharge electrode 26. In other words, the contact member 30 is conductive. Accordingly, the high voltage generated at the secondary electrode 40 is applied to the discharge electrode 26 via the contact member 30. The contact member 30 is formed of a metallic material such as stainless steel (SUS), copper, and aluminum and is elastic. Thus, the contact member 30 suppresses transmission of mechanical oscillation, which occurs at the piezoelectric oscillator 24, to the discharge electrode 26.

The contact member 30 has a substantially a spherical shape and is in point contact with a central portion (refer to Fig. 3(b)) of the high-voltage output surface 40a and a basal end of the discharge electrode 26. Due to such point contact connection, the contact member 30 further effectively attenuates the oscillation of the piezoelectric oscillator 24. However, the shape of the contact member 30 is not limited to a spherical shape.

As shown in Fig. 2, the piezoelectric oscillator 24 includes a node F1 of the oscillation resulting from the standing wave W1. A holding portion 42, which holds the piezoelectric oscillator 24, is arranged at a position coinciding with the node F1 of the standing wave W1. The holding portion 42 is formed by an elastic body and supports the piezoelectric oscillator 24 by sandwiching the piezoelectric oscillator 24 in the thickness direction (Y direction). Due to the holding portion 42, even if mechanical oscillation occurs in the longitudinal direction (X direction) of the piezoelectric oscillator 24, tensile stress and compressive stress are suppressed from concentrating at the node F1.

The discharge electrode 26, which serves as the first electrode, is formed from a metallic material of which main component is platinum. Thus, the discharge electrode 26 generates platinum microparticles as the discharge product P when discharged. The discharge electrode 26 is generally cylindrical and includes a distal end that forms a planar surface. The planar surface is perpendicular to an axial direction of the discharge electrode 26 (refer to Fig. 3(b)).

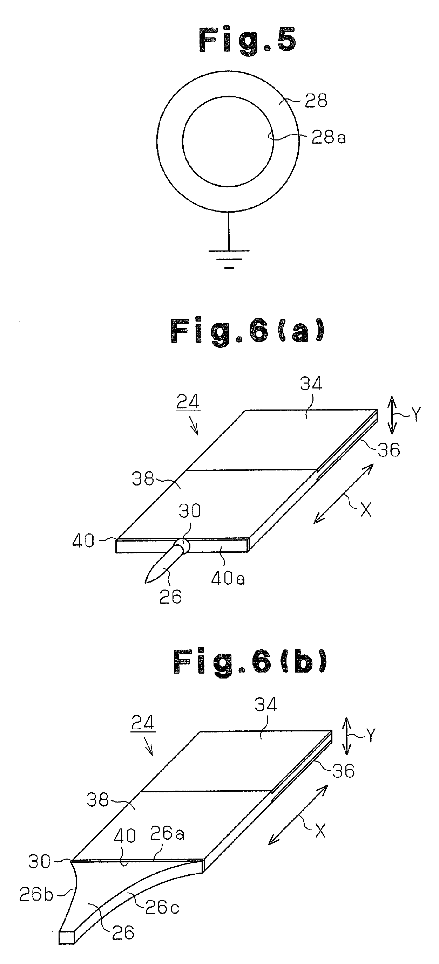

The opposing electrode 28, which serves as the second electrode, is located in an atmosphere of platinum microparticles emitted from the discharge electrode 26. In other words, the opposing electrode 28 is located in the vicinity of the discharge electrode 26. As shown in Fig. 5, the opposing electrode 28 is ring-shaped and includes a through hole 21 a. The diameter of the through hole 21 a, or an inner diameter of the ring, is, for example, about 1 to 5 mm. However, the opposing electrode 28 does not have to ring-shaped and may have, for example, a semi-circular shape. The opposing electrode 28 is connected to ground. When a high voltage (second voltage) is applied between the discharge electrode 26 and the opposing electrode 28, discharging occurs and platinum microparticles are emitted. Since the opposing electrode 28 is ring-shaped, most of the emitted platinum microparticles pass through the through hole 28a of the opposing electrode 28.

The mechanism for generating platinum microparticles will now be described. A high voltage is applied between the discharge electrode 26 and the opposing electrode 28 so that, for example, the discharge electrode 26 acts as a negative electrode and the opposing electrode 28 acts as a positive electrode. As a result, discharging occurs between the discharge electrode 26 and the opposing electrode 28. Due to the discharging, positively charged particles (positive ions) suspended in the air strike the distal end of the discharge electrode 26 so as to perform sputtering on the discharge electrode 26. As a result, a large amount of fine platinum microparticles is stably generated from the discharge electrode 26. Here, most of the platinum microparticles are emitted toward the opposing electrode 28. In other words, the opposing electrode 28 enhances efficiency of the generation of platinum microparticles and applies directivity to an emission direction of the platinum microparticles. The platinum microparticles emitted from the distal end of the discharge electrode 26 pass through the through hole 28a of the opposing electrode 28 and are emitted to the exterior.

The platinum microparticles produce an antioxidative effect that decomposes reactive oxygen. Accordingly, by supplying platinum microparticles to hair and the like, reactive oxygen generated in the hair by ultraviolet rays can be decomposed to suppress damage to the hair (such as the separation of cuticles).

The discharge device 20 (metal microparticle generator) of the first embodiment has the advantages described below.
(1) The piezoelectric oscillator 24 arranged in the discharge device 20 is smaller than a winding transformer and is not subject to restraints on shapes and the like as in the case of a winding transformer. Thus, the discharge device 20 can be downsized as compared to when using a winding transformer.
(2) A high voltage, which is increased by the piezoelectric oscillator 24, is applied to the discharge electrode 26. Accordingly, the discharge device 20, which serves as a metal microparticle generator, is capable of generating a large amount of platinum microparticles.
(3) The mechanical oscillation that occurs at the piezoelectric oscillator 24 is attenuated by the contact member 30 arranged between the discharge electrode 26 and the piezoelectric oscillator 24. Accordingly, the oscillation of the piezoelectric oscillator 24 is prevented from inhibiting discharging, and the discharge product P (metal microparticles) can be efficiently and stably emitted from the discharge electrode 26.
(4) The contact member 30 is conductive and elastic. Accordingly, the electric connection of the discharge electrode 26 and piezoelectric oscillator 24 and the attenuation of the oscillation of the piezoelectric oscillator 24 can be achieved with a single member. Consequently, the number of components is not significantly increased.
(5) The contact member 30 is in point contact with the piezoelectric oscillator 24.
   Accordingly, transmission of the oscillation of the piezoelectric oscillator 24 to the contact member 30 and, in turn, to the discharge electrode 26 can be suppressed more reliably.
(6) Since the contact member 30 is also in point contact with the discharge electrode 26, transmission of the oscillation of the piezoelectric oscillator 24 from the contact member 30 to the discharge electrode 26 can be suppressed more reliably.
(7) The opposing electrode 28 serving as a second electrode is provided. Accordingly, discharging between the discharge electrode 26 and the opposing electrode 28 is performed efficiently and stably. Further, directivity is applied to the direction in which metal microparticles scatter.
(8) Since the discharge device 20 includes the fan 32 that blows air that transfers metal microparticles, the metal microparticles can be efficiently transferred to a desired location.
(9) The holding portion 42 that holds the piezoelectric oscillator 24 is arranged at a location coinciding with the node F1 of the mechanical oscillation of the piezoelectric oscillator 24. The holding portion 42 suppresses concentration of tensile stress and compressive stress, which are caused by the mechanical oscillation of the piezoelectric oscillator 24, at the node F1.
   Accordingly, damage of the piezoelectric oscillator 24 at the position of the node F1 can be suppressed.
(10) The secondary electrode 40 of the piezoelectric oscillator 24 is provided with (coated with) a protective material such as gold plating or the like formed from an acid-resistant material.
   Thus, resistance of the secondary electrode 40 to acid, high voltage, and strong mechanical oscillation is enhanced.
(11) The discharge electrode 26 emits platinum microparticles. Accordingly, platinum microparticles, which are highly effective in suppressing damage to hair (such as separation of cuticles), can be supplied to hair.

The first embodiment may be modified as follows.

The piezoelectric oscillator 24 may include a single primary electrode. In addition, the piezoelectric oscillator 24 may include a plurality of secondary electrodes. This also applies to the other embodiments described below.

The shape of the distal end of the discharge electrode 26 is not limited to a planar surface. For example, as shown in Fig. 6(a), the distal end of the discharge electrode 26 may have a pointed shape (this also applies to the other embodiments described below). In this structure, since an electric field is apt to concentrating at the distal end of the discharge electrode 26, the charged particles suspended in the air are concentrated when striking the distal end of the discharge electrode 26. Accordingly, platinum microparticles can be generated with further efficiency.

The contact member 30 is not limited to being in point contact with the piezoelectric oscillator 24 and the discharge electrode 26 (this also applies to the other embodiments described below). For example, as shown in Fig. 6(b), the contact member 30 may be in surface contact with both the piezoelectric oscillator 24 and the discharge electrode 26. In this case, for example, the discharge electrode 26 may include a basal end surface 26a having about the same area as the secondary electrode 40 and two side surfaces 26b and 26c at which the width decreases in a curved manner from the basal end surface 26a toward the distal end.

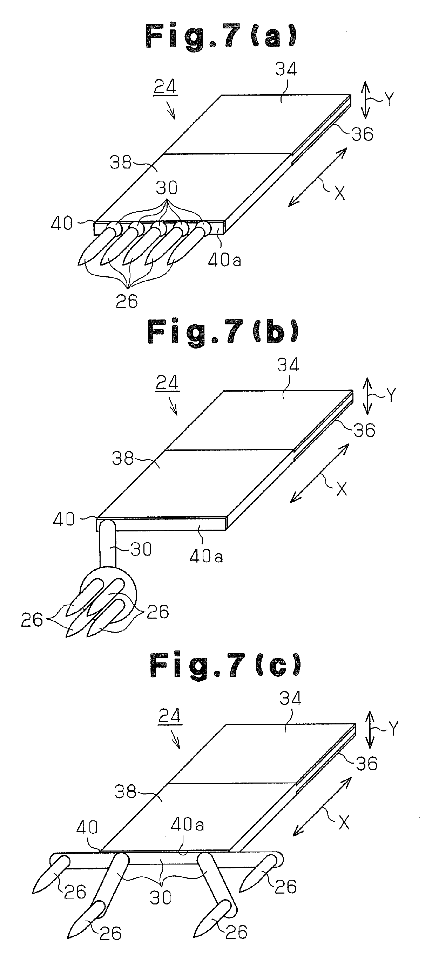

There may be a plurality of discharge electrodes 26 (this also applies to the other embodiments described below). For example, as shown in Fig. 7(a), a plurality of contact members 30 may be arranged on the high-voltage output surface 40a, and a plurality of discharge electrodes 26 may be arranged via the contact members 30. With this structure, the amount of generated platinum microparticles can be increased in comparison to when a single discharge electrode 26 is used.

Alternatively, as shown in Fig. 7(b), a plurality of discharge electrodes 26 may be provided via a single contact member 30 arranged on the high-voltage output surface 40a (this also applies to the other embodiments described below). In addition, as shown in Fig. 7(c), a single discharge electrode 26 may be arranged on each of a plurality of contact members 30 extending outward from the high-voltage output surface 40a.

The main component of the discharge electrode 26 need not necessarily be platinum and may be, for example, zinc. Since zinc also has an antioxidative effect, by attaching zinc particles generated from the discharge electrode 26 to hair, damage to hair (such as separation of cuticles) can be suppressed.

The opposing electrode 28 does not have to accurately oppose the discharge electrode 26 (this also applies to the other embodiments described below). Further, the opposing electrode 28, which serves as the second electrode, may be omitted (this also applies to the other embodiments described below). In this case, the functions of the opposing electrode 28 may be substituted by, for example, a charge removal plate or the housing of the discharge device 20. Since such a charge removal plate or housing is connected to ground, the charge removal plate or the housing may be used as an electrode. In other words, the opposing electrode 28 is not necessarily required (this also applies to the other embodiments described below).

The contact member 30 may be omitted (this also applies to the other embodiments described below). However, in such a case, the piezoelectric oscillator 24 is electrically connected to the opposing electrode 28. Even with this structure, oscillation of the piezoelectric oscillator 24 is not transmitted to the discharge electrode 26. Thus, discharging does not become unstable. In other words, the feature of "the first electrode and the piezoelectric oscillator being out of contact with each other" of the present invention means that the piezoelectric oscillator 24 is electrically connected to the discharge electrode 26 (the first electrode) via the contact member 30 (the oscillation attenuation unit) or that the piezoelectric oscillator 24 is electrically connected to the opposing electrode 28 (the second electrode).

### Second Embodiment

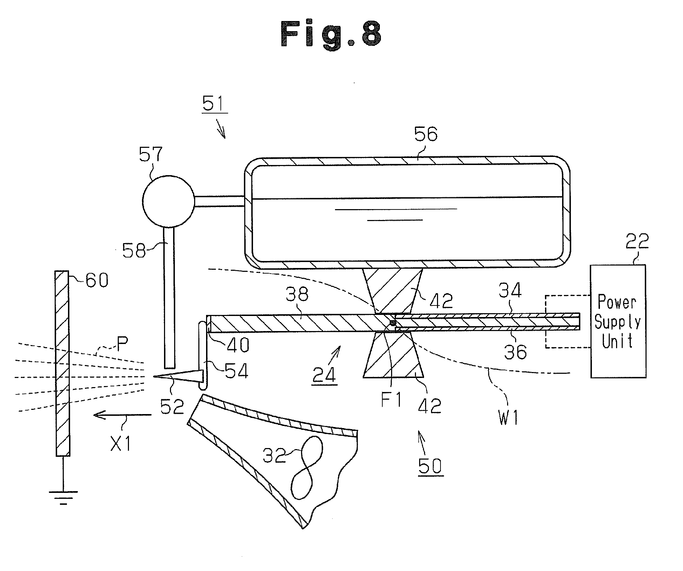

A discharge device 50 according to a second embodiment will now be described with reference to Fig. 8. The discharge device 50 according to the second embodiment is applied to an electrostatic atomization device 51 and generates charged microparticle mist (charged atomized liquid) as a discharge product P. In the structure of the second embodiment, components similar to those in the first embodiment are denoted by the same reference characters.

As shown in Fig. 8, the discharge device 50 in the electrostatic atomization device 51 includes a power supply unit 22, which that supplies AC voltage (first voltage), a piezoelectric oscillator 24, which increases the first voltage to a second voltage, and a discharge electrode 52, which serves as a first electrode. The discharge device 50 further includes a contact member 54, which is arranged between the discharge electrode 52 and the piezoelectric oscillator 24 and which serves as an oscillation attenuation unit that electrically connects the discharge electrode 52 and the piezoelectric oscillator 24 with each other. The power supply unit 22 and the piezoelectric oscillator 24 are configured in the same manner as in the first embodiment (refer to Figs. 2 and 3). In other words, the piezoelectric oscillator 24 oscillates in a standing wave W1 having a wavelength of λ/2 upon application of the AC voltage (the first voltage) from the power supply unit 22 to supply the discharge electrode 52 with the second voltage, which is higher than the first voltage. The contact member 54 has the same structure as the contact member 26 of the first embodiment (Fig. 2) but differs in shape. The discharge device 50 further includes a fan 32 similar to that of the first embodiment serving as an air blower.

In addition to the discharge device 50 described above, the electrostatic atomization device 51 includes a tank 56, which is attached in a removable manner to a tank holder (not shown), and an electric pump 57, which supplies the liquid stored in the tank 56 to the discharge electrode 52 via a liquid supply passage 58. The pump 57 is arranged in the liquid supply passage 58. In the second embodiment, the tank 56, the electric pump 57, and the liquid supply passage 58 form a liquid supplying unit.

The contact member 54 is in point contact with a central portion of a surface of a secondary electrode 40 arranged in the piezoelectric oscillator 24. Accordingly, a high voltage (the second voltage) generated at the secondary electrode 40 is applied to the discharge electrode 52 via the contact member 54. In other words, the discharge electrode 52 is supported by the contact member 54 that is connected to the piezoelectric oscillator 24. The piezoelectric oscillator 24 is supported by a holding portion 42 in the same manner as in the first embodiment. That is, the discharge electrode 52 and the piezoelectric oscillator 24 are respectively supported by different members.

In the same manner as in the first embodiment, the discharge device 50 further includes an opposing electrode 60 serving as a second electrode that is connected to ground and spaced apart from the discharge electrode 52. Obviously, the second electrode may be substituted by a member other than the opposing electrode 60 as described in the first embodiment. Further, the opposing electrode 60 may be set to a reference potential other than ground.

In the discharge device 50, discharging (corona discharging) occurs when a high voltage is applied between the discharge electrode 52 and the opposing electrode 60. Due to the discharging, the liquid supplied from the tank 56 to a distal end of the discharge electrode 52 via the liquid supply passage 58 is charged and a Coulomb force acts on the charged liquid. Consequently, the surface of the liquid supplied to the distal end of the discharge electrode 52 rises locally in a conical shape to form a Taylor cone. As a result, electric charge concentrates at a distal portion of the Taylor cone, and electrostatic atomization is performed by the repetitive fission/scattering (Rayleigh fission) of the liquid subjected to a repulsive force of the highly densified electric charge. This generates a charged microparticle mist (a charged atomized liquid) having radicals generated by electrolysis. The charged microparticle mist has a nanometer size or a smaller size. The charged microparticle mist is efficiently transferred toward a desired location (in a direction of an arrow X1 shown in Fig. 8) by the air blown by the fan 32 so as to promote health and beauty effects.

The discharge device 50 (electrostatic atomization device 51) according to the second embodiment has the advantages described below.
(1) The piezoelectric oscillator 24 arranged in the discharge device 50 is smaller than a winding transformer and is not subject to restraints on shapes and the like as in the case of a winding transformer. Thus, the discharge device 50 can be downsized as compared to when using a winding transformer.
(2) The second voltage (high voltage), which is increased by the piezoelectric oscillator 24, is applied to the discharge electrode 52. Accordingly, the electrostatic atomization device 51 is capable of generating a large amount of charged microparticle mist using high voltage.
(3) The mechanical oscillation that occurs at the piezoelectric oscillator 24 is attenuated by the contact member 54 arranged between the discharge electrode 52 and the piezoelectric oscillator 24. When the mechanical oscillation of the piezoelectric oscillator 24 is transmitted to the discharge electrode 52, mist may be generated without being charged during electrostatic atomization. The contact member 54 is capable of suppressing such oscillation and enables a charged microparticle mist to be efficiently and stably emitted from the discharge electrode 52.
(4) The contact member 54 is conductive and elastic. Accordingly, the electric connection between the discharge electrode 52 and the piezoelectric oscillator 24 and the attenuation of the oscillation of the piezoelectric oscillator 24 can be achieved with a single member. Thus, the number of components is not significantly increased.
(5) The contact member 54 is in point contact with the piezoelectric oscillator 24. Thus, transmission of the oscillation of the piezoelectric oscillator 24 to the contact member 54 and, in turn, to the discharge electrode 52 is suppressed more reliably.
(6) The opposing electrode 60 serving as a second electrode is provided. Accordingly, discharging between the discharge electrode 52 and the opposing electrode 60 can be performed efficiently and stably. Further, directivity may be applied to a direction in which the charged microparticle mist scatters.
(7) The discharge device 50 includes the fan 32 that blows air for transferring the charged microparticle mist. Accordingly, the charged microparticle mist can be efficiently transferred to a desired location to enable improvements in effects such as deodorization, sterilization, allergen inactivation, pesticide decomposition, and organic matter decomposition (stain removal), as well as health and beauty effects.
(8) The holding portion 42 that holds the piezoelectric oscillator 24 is provided at a location coinciding with a node F1 of the mechanical oscillation of the piezoelectric oscillator 24. The holding portion 42 suppresses concentration of tensile stress and compressive stress caused by the mechanical oscillation of the piezoelectric oscillator 24 at the node F1. Accordingly, damage of the piezoelectric oscillator 24 at the location of the node F1 can be suppressed.
(9) The secondary electrode 40 of the piezoelectric oscillator 24 is provided with (coated with) a protective material such as gold plating or the like formed from an acid-resistant material. Thus, resistance of the secondary electrode 40 to acid, high voltage, and strong mechanical oscillation is enhanced.

The second embodiment may be modified as follows.

The shape of the contact member 54 may have the shape of the contact member 40 in the first embodiment (spherical shape shown in Fig. 2). In other words, the contact member 54 may be in point contact with the piezoelectric oscillator 24 and the discharge electrode 52.

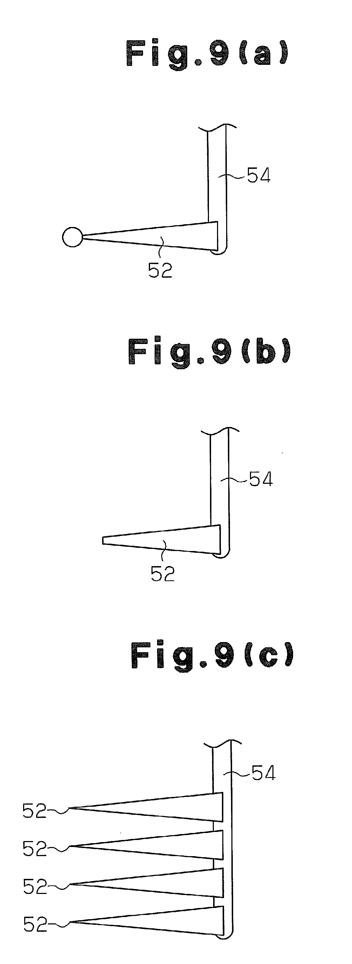

The discharge electrode 52 shown in Fig. 8 has a pointed distal portion but instead may have a spherical distal portion as shown in Fig. 9(a). In this structure, the contact area between the liquid supplied from the liquid supplying unit (the tank 56, the pump 57, and the liquid supply passage 58) and the discharge electrode 52 can be increased to increase the amount of generated charged microparticle mist. Alternatively, as shown in Fig. 9(b), the discharge electrode 52 may include a distal portion having the shape of a planar surface in order to prevent deterioration at the distal end of the discharge electrode 52 caused by the application of high voltage.

Further, as shown in Fig. 9(c), a plurality of discharge electrodes 52 may be provided in order to increase the amount of generated charged microparticle mist. In this case, in the same manner as in the first embodiment, the discharge electrodes 52 may be arranged on a single contact member 54, a single discharge electrode 52 may be arranged on each of a plurality of contact members 54, or a structure combining the two may be adopted (refer to Figs. 7(a) to 7(c)).

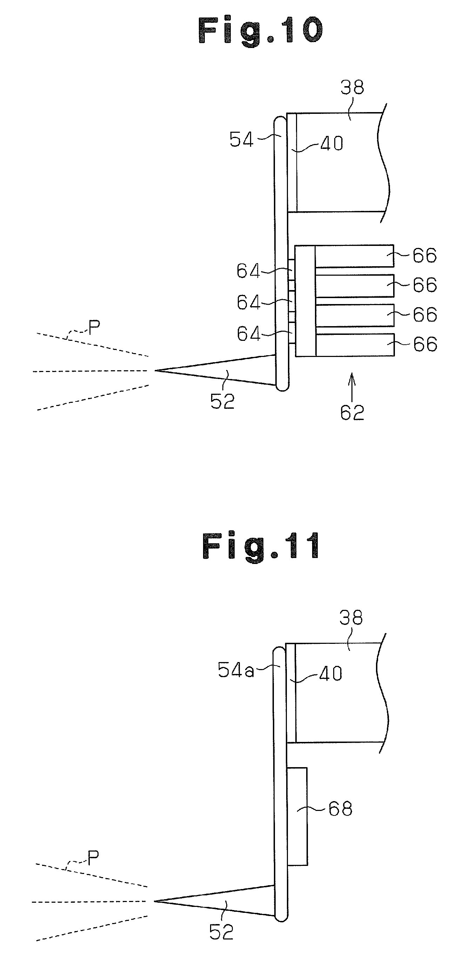

The liquid supplying unit is not limited to a structure including the tank 56, the pump 57, and the liquid supply passage 58. For example, as shown in Fig. 10, the liquid supplying unit may be a Peltier unit 62 that supplies condensed liquid to the discharge electrode (first electrode) 52 by cooling the discharge electrode 52. The Peltier unit 62 includes Peltier elements 64, each including a cooling surface, which is in contact with the contact member 54, and a heat radiating surface, which is located on the opposite side of the cooling surface. Heat radiating fins 66 are attached to the heat radiating surface of the Peltier elements 64. When the discharge electrode 52 is cooled via the contact member 54 by driving of the Peltier elements 64, condensation occurs on the surface of the discharge electrode 52. Accordingly, water serving as a condensed liquid is supplied to the discharge electrode 52. The use of the Peltier unit 62 eliminates the need of storage means such as the tank 56, which stores the liquid used for electrostatic atomization. Thus, the electrostatic atomization device can be downsized and the trouble of supplying the liquid whenever necessary can be omitted.

The oscillation attenuation unit is not limited to a structure including a single contact member 54 that is elastic and conductive. For example, as shown in Fig. 11, the oscillation attenuation unit may include a contact member 54a, which is at least conductive (and may also have an elastic property), and an elastic member 68, which is formed from an anti-oscillation rubber and which is fixed to the contact member 54a. In other words, a separate elastic member 68 may be connected to the contact member 54a (or the contact member 54). In this structure, transmission of mechanical oscillation, which occurs at the piezoelectric oscillator 24, to the discharge electrode 52 is more suppressed in a further preferable manner by the elastic member 68. The structure of the oscillation attenuation unit shown in Fig. 11 may also be applied to other embodiments including the first embodiment.

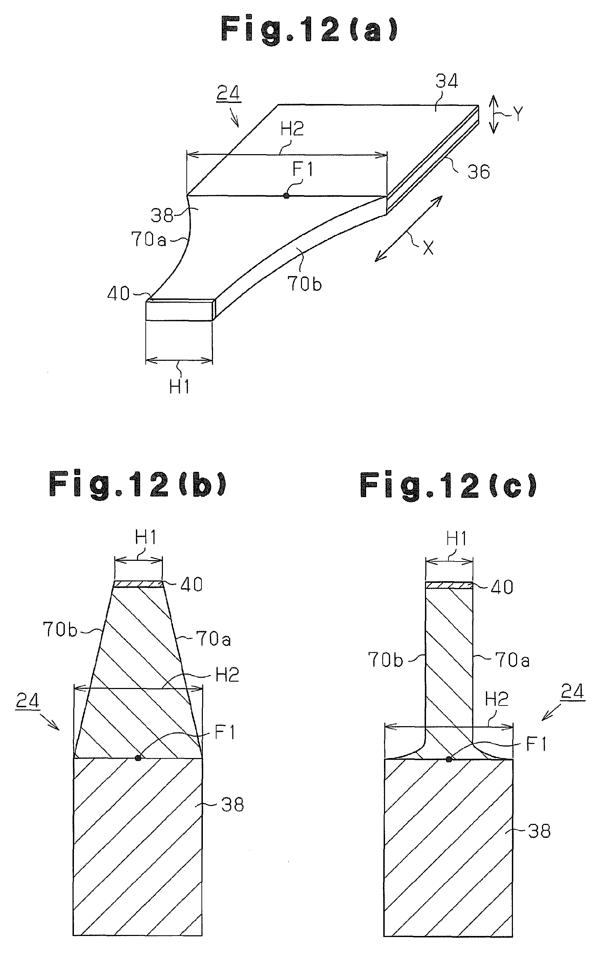

The shape of the piezoelectric oscillator 24 may be modified as shown in Figs. 12(a) to 12(c). The piezoelectric body 38 of the piezoelectric oscillator 24 shown in Fig. 12(a) has side surfaces 70b and 70c at which the width decreases in a curved manner from the location of the node F1 of the standing wave W1 to the secondary electrode 40. In this structure, the width H1 in a shorter-side direction of the piezoelectric oscillator 24 at the location of the secondary electrode 40 is shorter than the width H2 in the shorter-side direction of the piezoelectric oscillator 24 at the location of the node F1. In other words, a cross-sectional area of the piezoelectric oscillator 24 decreases from the location of the node F1 toward the secondary electrode 40. In this structure, high voltage can be generated more efficiently at the secondary electrode 40. As shown in Fig. 12(b), the width between the side surfaces 70a and 70b may decrease in a linear manner instead of in a curved manner. Alternatively, as shown in Fig. 12(c), the piezoelectric body 38 may be formed so as to have a width H1 from the location of the node F1 to one of the end surfaces (the secondary electrode 40) of the piezoelectric body 38 and a width H2 from the location of the node F1 to the other end surface of the piezoelectric body 38. Moreover, the structure of the piezoelectric oscillator 24 as shown in Figs. 12(a) to 12(c) may also be applied to other embodiments including the first embodiment.

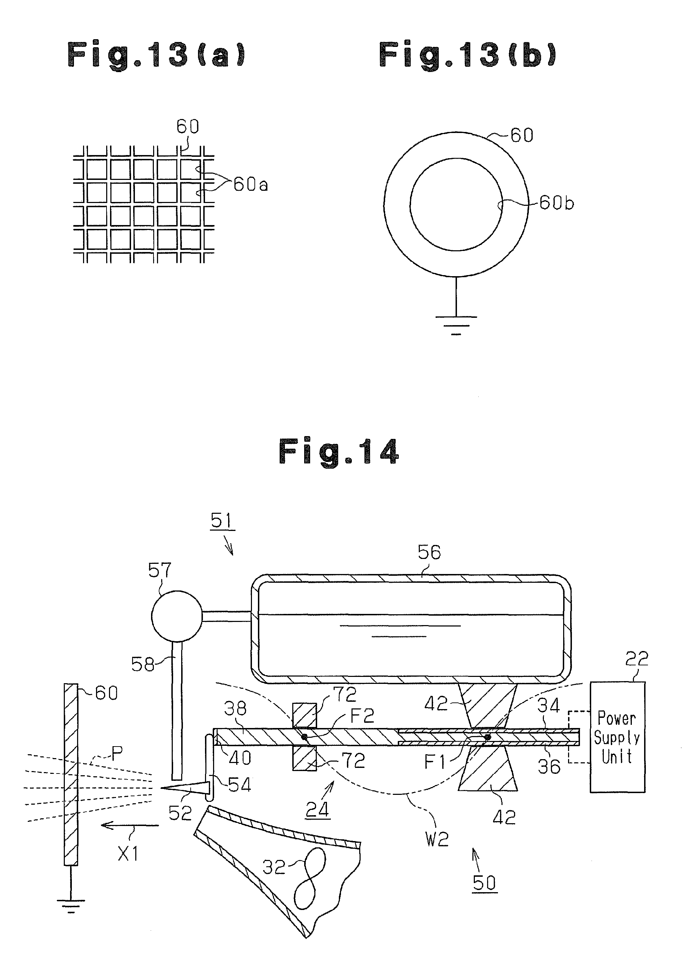

Electrode structures of various shapes can be adopted for the opposing electrode 60 serving as the second electrode. For example, as shown in Fig. 13(a), the opposing electrode 60 may be a reticulated electrode having a plurality of holes 60a when viewed from the front. Alternatively, in the same manner as in the first embodiment (refer to Fig. 5), the opposing electrode 60 may be a ring-shaped electrode having a through hole 60b as shown in Fig. 13(b). In the case of a ring-shaped electrode, the discharge electrode 52 should be arranged at a central position of the through hole 60b of the opposing electrode 60. Moreover, the structure of the opposing electrode 60 as shown in Fig. 13(a) may also be applied to other embodiments including the first embodiment.

The piezoelectric oscillator 24 does not have to be oscillated in a standing wave W1 having a wavelength of λ/2. For example, as shown in Fig. 14, the piezoelectric oscillator 24 may oscillate in a standing wave W2 having a wavelength of λ (i.e., the length of λ corresponds to a longitudinal dimension of the piezoelectric oscillator 24). In this case, the piezoelectric oscillator 24 has nodes F1 and F2 at two locations. With this structure, in addition to the holding portion 42 that holds the piezoelectric oscillator 24 at the location of the node F1, a protection portion 72 that protects the piezoelectric oscillator 24 at the location of the node F2 should be provided. The protection portion 72 is formed from an elastic body and is fixed by bolts or the like so as to sandwich the piezoelectric oscillator 24 in a thickness direction. When mechanical oscillation occurs at the piezoelectric oscillator 24, the holding portion 42 and the protection portion 72 sandwiching the piezoelectric oscillator 24 suppress concentration of tensile stress and compressive stress at the nodes F1 and F2 of the standing wave W2. Accordingly, damage of the piezoelectric oscillator 24 can be suppressed. The structure of the piezoelectric oscillator 24 shown in Fig. 14 may also be applied to other embodiments including the first embodiment.

The contact member 54 does not have to be in point contact with the central portion of the secondary electrode 40 and may be in contact with an end portion in a width direction of the secondary electrode 40 (refer to Fig. 7(b)).

The liquid supplying unit is not limited to a structure that supplies liquid from the liquid supply passage 58 to the discharge electrode 52 using the pump 57. For example, the liquid supplying unit may supply the liquid inside the tank 56 to the discharge electrode 52 using a capillary phenomenon instead of using the pump 57 and the liquid supply passage 58.

The piezoelectric oscillator 24 is formed using a lead zirconate titanate (PZT) based material but may be formed using another piezoelectric body. This also applies to other embodiments.

A structure may be adopted in which air blown by the air blowing fan 32 strikes the radiating fins 66 of the Peltier unit 62 (Fig. 10). In this case, the radiating fins 66 can be cooled more efficiently.

The means for fixing the holding portion 42 to the piezoelectric oscillator 24 is not limited to bolts. The holding portion 42 may also be fixed to the piezoelectric oscillator 24 by clamping it with the housing, by using an adhesive, or by other means.

### Third Embodiment

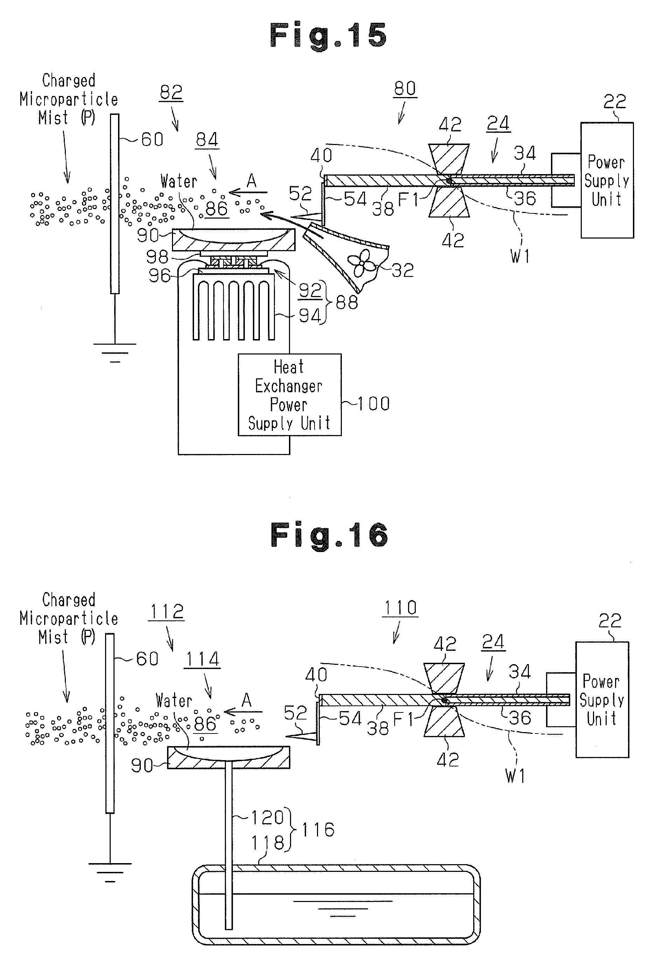

A discharge device 80 according to a third embodiment will now be described with reference to Fig. 15. The discharge device 80 according to the third embodiment is also applied to an electrostatic atomization device 82 and generates ions or a charged microparticle mist as a discharge product P. The discharge device 80 according to the third embodiment has the same structure as the discharge device 50 according to the second embodiment (Fig. 8). In the structure of the third embodiment, components similar to those in the first and second embodiments are denoted by the same reference characters.

As shown in Fig. 15, the electrostatic atomization device 82 includes the discharge device 80 and a humidity environment formation unit 84. The humidity environment formation unit 84 is arranged in a discharge zone 86 in which a discharge electrode 52 performs discharging to generate charged microparticles (the discharge product P), and forms a humidity environment using a predetermined liquid (in this case, water) in the discharge zone 86. The charged microparticles are, for example, negative ions. In the third embodiment, a charged microparticle mist is generated when water (liquid) provided in the humidity environment is charged by the discharging that occurs at the discharge electrode 52 upon the application of a second voltage (voltage increased from a first voltage by a piezoelectric oscillator 24).

In the third embodiment, the structure of the humidity environment formation unit 84 includes a Peltier unit 88, which is one example of a thermoelectric conversion element, and a liquid reservoir 90, which stores the liquid (in this case, water) that forms the humidity environment. However, the liquid reservoir 90 is not essential.

The Peltier unit 88 includes a Peltier element 92, which cools the discharge zone 86 in which a humidity environment is generated, and radiating fins 94. The Peltier element 92 includes a heat-radiating substrate 96, which has a heat-radiating electrode connected to the radiating fins 94, a heat-absorbing substrate 98, which has a heat-absorbing electrode, and P-type and N-type thermoelectric semiconductors connected between the heat-radiating electrode and the heat-absorbing electrode.

The heat-radiating substrate 96 and the heat-absorbing substrate 98 are each insulative and thermally conductive. A circuit in which the heat-radiating electrode, the N-type thermoelectric semiconductor, the heat-absorbing electrode, and the P-type thermoelectric semiconductor are connected in series in this order is formed between the two substrates 96 and 98. DC current supplied from a heat exchanger power supply unit 100 to the circuit causes heat conduction from the heat-absorbing substrate 98 to the heat-radiating substrate 96. The heat conducted from the heat-absorbing substrate 98 to the heat-radiating substrate 96 is efficiently radiated by the radiating fins 94.

The Peltier element 92 (Peltier unit 88) is arranged in a direction in which a charged microparticle mist P is scattered from the discharge electrode 52 (direction indicated by an arrow A shown in Fig. 15). Accordingly, due to a thermoelectric conversion effect, the Peltier element 92 forms a high humidity environment in the discharge zone 86 between the discharge electrode 52 and the opposing electrode 60. More specifically, the heat-absorbing substrate 98, which opposes the heat-radiating substrate 96 in the Peltier element 92, faces the discharge zone 86. Thus, the moisture in the air in the discharge zone 86 is condensed and the discharge zone 86 is maintained in a high humidity environment.

The liquid reservoir 90 is arranged on the heat-absorbing substrate 98 of the Peltier element 92. The liquid reservoir 90 is open toward the discharge zone 86 and includes a receiving portion that stores condensed water generated by the Peltier element 92.

The discharge electrode 52 is formed to have a pointed shape that becomes narrower in a direction in which the charged microparticle mist is scattered (the direction of arrow A). The opposing electrode 60 is connected to ground having a reference potential. A second voltage, which is a high voltage, is applied between the opposing electrode 60 and the discharge electrode 52. Accordingly, in the same manner as in the second embodiment, the opposing electrode 60 provides directivity to the direction in which the charged microparticle mist is scattered. The opposing electrode 60 may alternatively have a reticulated shape (Fig. 13(a)) or a ring shape (Fig. 13(b)).

During operation, when the second voltage, which is increased from a first voltage by the piezoelectric oscillator 24, is applied to the discharge electrode 52 via the contact member 54, corona discharging occurs between the discharge electrode 52 and the opposing electrode 60 and negative ions are generated in the discharge zone 86. In this state, the discharge zone 86 is kept in a high humidity environment that contains water generated by the Peltier element 92 (the humidity environment formation unit 84). Thus, the moisture in the humidity environment is negatively charged due to the discharging, and a charged microparticle mist or, in other words, a negative ion mist is generated in the discharge zone 86. The charged microparticle mist is transferred in the direction of the arrow A by the air blown by the fan 32 and is emitted to the exterior of the electrostatic atomization device 82.

When the moisture in the air condenses and collects on the surface of the discharge electrode 52 due to the Peltier element 92, the water on the discharge electrode 52 is electrostatically atomized by corona discharging and a charged microparticle mist is directly generated in the same manner as in the second embodiment. In other words, the water on the discharge electrode 52 forms a Taylor cone and repetitively undergoes Rayleigh fission. As a result, a charged microparticle mist is emitted from the discharge electrode 52 as a discharge product P.

The discharge device 80 (the electrostatic atomization device 82) according to the third embodiment has the advantages described below.
(1) The piezoelectric oscillator 24 arranged in the discharge device 80 is smaller than a winding transformer and is not subject to restraints on shapes and the like as in the case of a winding transformer. Thus, the discharge device 80 can be downsized as compared to when using a winding transformer.
(2) The second voltage (a high voltage), which is increased by the piezoelectric oscillator 24, is applied to the discharge electrode 52. Thus, the electrostatic atomization device 82 is capable of generating a large amount of charged microparticle mist using high voltage.
(3) The humidity environment formation unit 84 maintains the discharge zone 86, in which the discharge electrode 52 performs discharging, in a humidity environment. In this structure, even if a liquid such as water is not directly supplied to the discharge electrode 52, that is, without collecting water on the discharge electrode 52, a charged microparticle mist can be generated from the discharge electrode 52 by performing corona discharging. In other words, a charged microparticle mist can be generated without performing electrostatic atomization. This suppresses unstable generation of a charged microparticle mist resulting from oscillation of the piezoelectric oscillator 24.
(4) The Peltier unit 88 is used in the humidity environment formation unit 84. Accordingly, a humidity environment can be easily formed in the discharge zone 86 by using the moisture in the air. Further, the use of the Peltier unit 88 eliminates the need of a component such as a tank for storing a liquid such as water.
(5) The humidity environment formation unit 84 includes the liquid reservoir 90 that stores condensed water generated by the Peltier unit 88. Thus, water can be stored in the liquid reservoir 90 to maintain the discharge zone 86 in an environment with higher humidity.
(6) The mechanical oscillation that occurs at the piezoelectric oscillator 24 is attenuated by the contact member 54 arranged between the discharge electrode 52 and the piezoelectric oscillator 24. When the mechanical oscillation of the piezoelectric oscillator 24 is transmitted to the discharge electrode 52, mist may be generated without being charged during electrostatic atomization. The contact member 54 suppresses the oscillation and enables a charged microparticle mist to be efficiently and stably emitted from the discharge electrode 52.
(7) The contact member 54 is conductive and elastic. Accordingly, the electric connection between the discharge electrode 52 and piezoelectric oscillator 24 and the attenuation of the oscillation of the piezoelectric oscillator 24 can be achieved with a single member. Thus, the number of components is not significantly increased.
(8) The contact member 54 is in point contact with the piezoelectric oscillator 24. Thus, transmission of the oscillation of the piezoelectric oscillator 24 to the contact member 54 and, in turn, to the discharge electrode 52 is suppressed more reliably.
(9) The opposing electrode 60 serving as a second electrode is provided. Accordingly, a discharge between the discharge electrode 52 and the opposing electrode 60 can be performed efficiently and stably. Further, directivity is applied to a direction in which the charged microparticle mist scatters.
(10) The discharge device 80 includes the fan 32 that blows air for transferring the charged microparticle mist. Accordingly, the charged microparticle mist can be efficiently transferred to a desired location to enable improvements in effects such as deodorization, sterilization, allergen inactivation, pesticide decomposition, and organic matter decomposition (stain removal), as well as health and beauty effects.
(11) The holding portion 42, which holds the piezoelectric oscillator 24, is arranged at a location coinciding with a node F1 of the mechanical oscillation of the piezoelectric oscillator 24. The holding portion 42 suppresses concentration of tensile stress and compressive stress resulting from the mechanical oscillation of the piezoelectric oscillator 24 at the node F1. Accordingly, damage of the piezoelectric oscillator 24 at the location of the node F1 can be suppressed.
(12) The secondary electrode 40 of the piezoelectric oscillator 24 is provided with (coated with) a protective material such as gold plating or the like formed from an acid-resistant material. Thus, resistance of the secondary electrode 40 to acid, high voltage, and strong mechanical oscillation is enhanced.

### Fourth Embodiment

A discharge device 110 according to a fourth embodiment will now be described with reference to Fig. 16. The discharge device 110 according to the fourth embodiment is also applied to an electrostatic atomization device 112. The electrostatic atomization device 112 according to the fourth embodiment has the same structure as the third embodiment except for the structure of a humidity environment formation unit. In the structure of the fourth embodiment, components similar to those in the first to third embodiments are denoted by the same reference characters. In Fig. 16, a fan 32 (Fig. 15) is not shown.

As shown in Fig. 16, in the fourth embodiment, a humidity environment formation unit 114 includes a liquid reservoir 90 and a liquid supplying unit 116. The liquid supplying unit 116 includes a tank 118, which is attached in a removable manner to a tank holder (not shown), and a liquid supply passage 120, which supplies the liquid in the tank 118 to the liquid reservoir 90. The liquid may be water or a liquid produced by adding another substance to water.

In the same manner as in the third embodiment, the liquid reservoir 90 is arranged to open toward a discharge zone 86 in a direction in which a charged microparticle mist is scattered. The transfer of the liquid from the tank 118 to the liquid reservoir 90 can be performed by an electric pump or the like (not shown).

The discharge device 110 (the electrostatic atomization device 112) according to the fourth embodiment has the following advantage in addition to advantages (1) to (3) and (6) to (12) of the third embodiment.
(13) The humidity environment formation unit 114 is formed by the liquid reservoir 90, the tank 118, and the liquid supply passage 118. Thus, with a simple structure, water can be stored in the liquid reservoir 90 to maintain the discharge zone 86 in an environment with higher humidity. Further, a humidity environment can be formed with lower power than when performing thermoelectric conversion with a Peltier unit.

### Fifth Embodiment

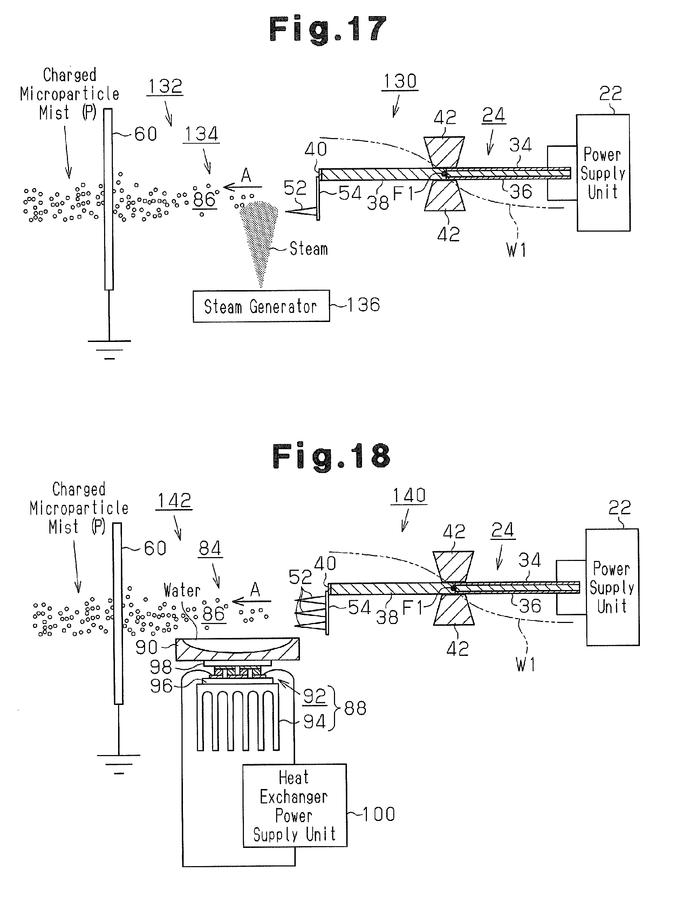

A discharge device 130 according to a fifth embodiment will now be described with reference to Fig. 17. The discharge device 130 according to the fifth embodiment is also applied to an electrostatic atomization device 132. The electrostatic atomization device 132 according to the fifth embodiment has the same structure as the third embodiment except for the structure of a humidity environment formation unit. In the structure of the fifth embodiment, components similar to those in the first to third embodiments are denoted by the same reference characters. In Fig. 17, a fan 32 (Fig. 15) is not shown.

As shown in Fig. 17, in the fifth embodiment, a humidity environment formation unit 134 includes a steam generator 136 that supplies liquid to a discharge zone 86 in the form of steam. The steam generator 136 is installed so as to disperse steam toward the distal end of a discharge electrode 52. The liquid may be water or a liquid produced by adding another substance to water.

The discharge device 130 (the electrostatic atomization device 132) according to the fifth embodiment has the following advantage in addition to advantages (1) to (3) and (6) to (12) of the third embodiment.
(14) The humidity environment formation unit 134 is formed by the steam generator 136. In this structure, the discharge zone 86 can be kept in an environment with an extremely high humidity by the steam emitted from the steam generator 136, and a large amount of charged microparticle mist can be generated in a stable manner.

### Sixth Embodiment

A discharge device 140 according to a sixth embodiment will now be described with reference to Fig. 18. The discharge device 140 according to the sixth embodiment is also applied to an electrostatic atomization device 142. The electrostatic atomization device 142 according to the fourth embodiment has the same structure as the third embodiment except for the use of a plurality of discharge electrodes 52. In the structure of the sixth embodiment, components similar to those in the first to third embodiments are denoted by the same reference characters. In Fig. 18, a fan 32 (Fig. 15) is not shown.

As shown in Fig. 18, in the sixth embodiment, the discharge electrodes 52 are electrically connected to a contact member 54. In this case, in the same manner as in the first embodiment, the discharge electrodes 52 may be arranged on a single contact member 54, a single discharge electrode 52 may be arranged on each of a plurality of contact members 54, or a structure combining the two may be adopted (refer to Figs. 7(a) to 7(c)). A single opposing electrode 60 or a plurality of opposing electrodes 60 may be used.

The discharge device 140 (the electrostatic atomization device 142) according to the sixth embodiment has the following advantage in addition to advantages (1) to (12) of the third embodiment.
(15) Since the discharge device 140 includes the plurality of discharge electrodes 52, a charged microparticle mist can be generated in a greater amount as compared to when only a single discharge electrode 52 is provided.

The third to sixth embodiments described above may be modified as follows.

In the fifth embodiment, a liquid reservoir (for example, the liquid reservoir 90 such as that of the third embodiment) may be used to store steam generated by the steam generator 136 in the form of a liquid. Accordingly, a high humidity environment of the discharge zone 86 can be maintained in a preferable manner.

In the third to sixth embodiments, air blown by the fan 32 may be arranged to strike the radiating fins 94 of the Peltier unit 88. This structure efficiently radiates heat with the radiating fins 94.

The structures of the discharge devices according to the first and second embodiments as well as their modifications may be adopted for the discharge devices according to the third to sixth embodiments.

### Seventh Embodiment

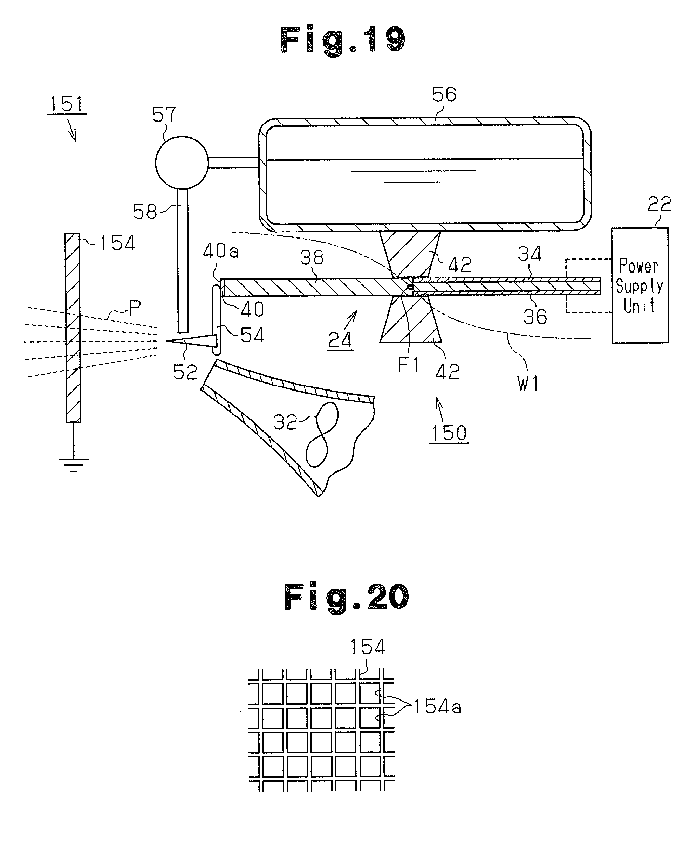

A discharge device 150 according to a seventh embodiment will now be described with reference to Figs. 19 and 20. Moreover, the discharge device 150 according to the seventh embodiment is also applied to an electrostatic atomization device 151. The electrostatic atomization device 151 according to the seventh embodiment has the same structure as the second embodiment (Fig. 8) except for the opposing electrode (second electrode), which has a modified structure. In the structure of the seventh embodiment, components similar to those in the first and second embodiments are denoted by the same reference characters.

As shown in Fig. 19, in the seventh embodiment, the opposing electrode 60 (Fig. 8) of the discharge device 50 according to the second embodiment is replaced with an opposing electrode 154. The opposing electrode 154 is connected to ground and is arranged in a charged microparticle mist atmosphere in the vicinity of a discharge electrode 52. The opposing electrode 154 is formed from activated charcoal containing a carbon substance. For example, the opposing electrode 154 may be formed by injection molding a carbon substance using a molding die.

As shown in Fig. 20, the opposing electrode 154 is formed to be lattice-shaped and includes a plurality of tetragonal holes 154a. The opposing electrode 154 is arranged so that a large portion of a charged microparticle mist passes through the opposing electrode 154 via the holes 154a. The number of the holes 154a (number of cells) is desirably set to 30 to 300 cells per square inch.

In the same manner as the electrostatic atomization devices according to the various embodiments described above, the discharge device 150 of the electrostatic atomization device 151 performs corona discharging between the discharge electrode 52 and the opposing electrode 154 and electrostatically atomizes a liquid supplied from a liquid supply passage 58 to generate a charged microparticle mist (the discharge product P). When generating the charged microparticle mist, the discharge device 150 simultaneously generates ozone. An elevated concentration of ozone generates an odor which some people may find unpleasant. Further, a high concentration of ozone is also unfavorable to humans. Accordingly, in the discharge device 150 according to the seventh embodiment, the opposing electrode 154 is provided with a function for reducing ozone. More specifically, the opposing electrode 154 is formed from activated charcoal containing a carbon substance.

The charged microparticle mist and the ozone are transferred toward the opposing electrode 154 by the fan 32. Here, the charged microparticle mist passes through the holes 154a of the opposing electrode 154. Ozone particles are attracted to a surface of the opposing electrode 154 (activated charcoal) and the ozone is adsorbed by the opposing electrode 154. As a result, an ozone-free charged microparticle mist can be emitted from the electrostatic atomization device 151.

The discharge device 150 (the electrostatic atomization device 151) according to the seventh embodiment has the advantages described below in addition to advantages (1) to (9) of the second embodiment.
(10) The opposing electrode 154 is formed from activated charcoal. Thus, ozone that is generated together with the charged microparticle mist is adsorbed by the opposing electrode 154 by the adsorption effect of the activated charcoal. Accordingly, even when ozone is generated, the ozone is adsorbed by the opposing electrode 154 and the amount of ozone released into air can be reduced.
(11) The opposing electrode 154 is formed to be lattice-shaped and includes a plurality of tetragonal holes 154a. Thus, when charged microparticle mist passes through the holes 154a, the ozone is adsorbed by the opposing electrode 154 by the adsorption effect of the activated charcoal. Accordingly, even though the opposing electrode 154 is arranged to oppose the discharge electrode 52, the emission of the charged microparticle mist into the atmosphere is not impeded.

The seventh embodiment described above may be modified as follows.

The opposing electrode 154 is not limited to being formed from activated charcoal. For example, the opposing electrode 154 may be formed from an ozone decomposition catalyst processed to be in a sheet form, lattice-shape, honeycomb shaped, or the like. In such structures, when ozone is adsorbed by the ozone decomposition catalyst, the ozone is decomposed by the ozone decomposition catalyst. Accordingly, even if ozone is generated, the amount of emission of ozone can be reduced.

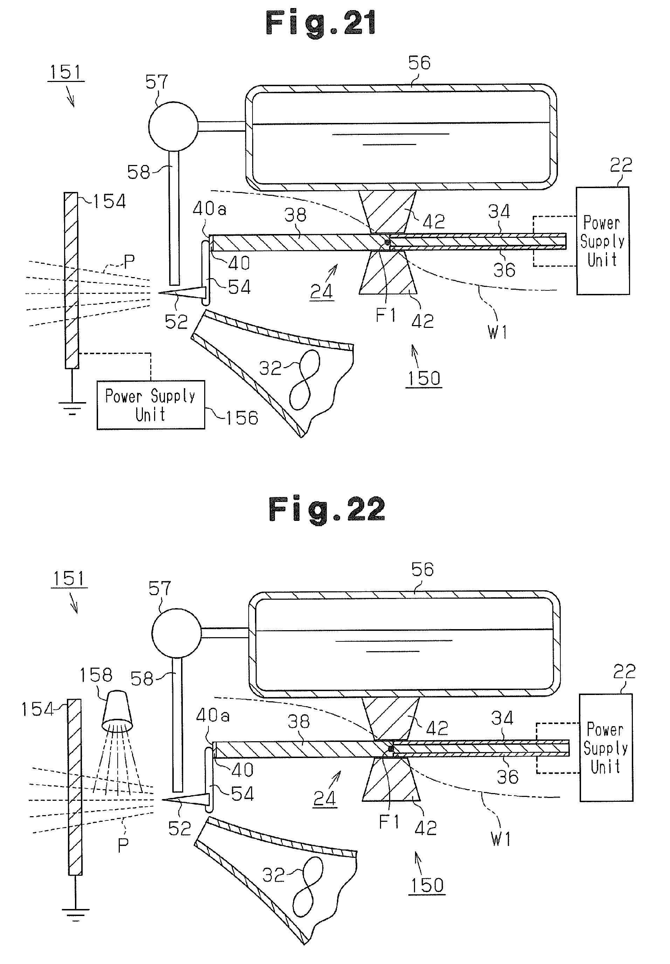

As shown in Fig. 21, a power supply unit 156 (a second power supply unit) may be electrically connected to the opposing electrode 154. In this case, the opposing electrode 154 may be a heating element capable of converting power supplied from the power supply unit 156 into heat. In this structure, ozone is thermally decomposed as the temperature rises in the opposing electrode 154, which is a heating element. Accordingly, even if ozone is generated, the amount of emission of ozone can be reduced.

As shown in Fig. 22, the electrostatic atomization device 151 may further include a UV lamp 158, which serves as an ultraviolet irradiating unit that irradiates ultraviolet light toward ozone moving from the discharge electrode 52 to the opposing electrode 154. In this structure, due to the ultraviolet light irradiated from the UV lamp 158, ozone can be decomposed during the movement of the ozone toward the opposing electrode 154 from the discharge electrode 52. Accordingly, the emission amount of ozone can be further reduced. Here, the wavelength of the ultraviolet light is desirably 200 to 310 nm. Further, the UV lamp 158 may be arranged in the electrostatic atomization device 51 according to the second embodiment.

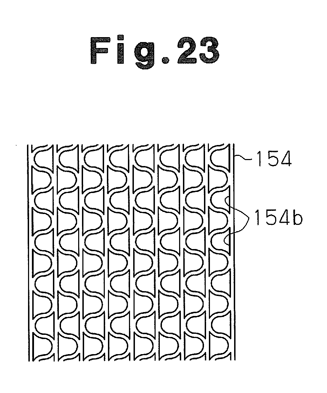

The opposing electrode 154 does not have be lattice-shaped and include a plurality of tetragonal holes 154a. For example, as shown in Fig. 23, the opposing electrode 154 may be formed to be honeycomb-shaped and include honeycomb-like holes 154b.

The opposing electrode 154 does not have to be formed by injection molding a carbon substance using a molding die and may be molded by performing paper making on powdered activated carbon combined with other material.

The structures of the discharge devices according to the first and second embodiments as well as modifications thereof may be adopted for the discharge device 150 according to the seventh embodiment.

### Eighth Embodiment

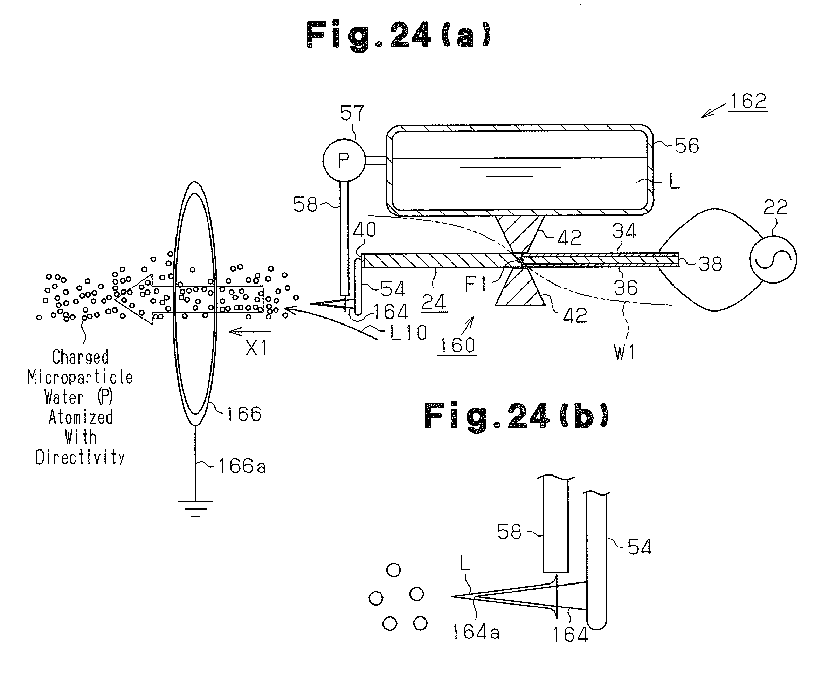

A discharge device 160 according to an eighth embodiment will now be described with reference to Fig. 24. The discharge device 160 according to the eighth embodiment is also applied to an electrostatic atomization device 162. The electrostatic atomization device 162 according to the eighth embodiment has the same structure as the second embodiment (Fig. 8) except for the discharge electrode (first electrode), which has a modified structure. In the structure of the eighth embodiment, components similar to those in the first and second embodiments are denoted by the same reference characters.

In the eighth embodiment, a discharge electrode 164, which serves as a first electrode, is formed by a member that produces a capillary phenomenon and is configured so that a liquid L supplied from a liquid supply passage 58 by the capillary phenomenon is moved on the discharge electrode 164. In Fig. 24, a fan 32 is not shown (in Fig. 24, an arrow L10 indicates a direction in which air is blown).

As shown in Figs. 24(a) and 24(b), in the same manner as in the second embodiment, the discharge electrode 164 has a pointed distal end 164a, which is shaped so that discharging energy can easily be concentrated. The discharge electrode 164 is formed by a member that produces a capillary phenomenon. For example, porous ceramic, felt, or sintered metal is used as such a member.

The discharge electrode 164 is electrically connected to a piezoelectric oscillator 24 (high-voltage output surface 40a) via a contact member 54. When porous ceramic or felt is used for the discharge electrode 164, the discharge electrode 164 becomes conductive when a liquid is supplied from the liquid supply passage 58 to the discharge electrode 164 and comes into contact with the contact member 54.

An opposing electrode 166, which serves as a second electrode, is, for example, ring-shaped and connected to ground. In this case, the discharge electrode 164 is arranged so as to be located at the center of the opposing electrode 166. As shown in Fig. 13(a) described earlier, the opposing electrode 166 may be a reticulated electrode. In the same manner as in the second embodiment, the opposing electrode 166 is used to apply directivity to a discharging direction of the discharge electrode 164, or the emission direction of a charged microparticle mist (discharge product P), and to produce a electrostatic atomization phenomenon with high efficiency.

In the same manner as the electrostatic atomization devices according to the various embodiments described above, the discharge device 160 of the electrostatic atomization device 162 performs corona discharging between the discharge electrode 52 and the opposing electrode 166 and electrostatically atomizes the liquid supplied from a liquid supply passage 58 to emit a charged microparticle mist (the discharge product P) toward a desired location (in the direction of arrow X1 shown in Fig. 24(a)). In this case, in the eighth embodiment, since the discharge electrode 164 is formed by a member that produces a capillary phenomenon, the discharge electrode 164 is capable of stably moving the liquid from the liquid supply passage 58 to the distal end 164a of the discharge electrode 164. Thus, even with a small amount of the liquid, electrostatic atomization can be performed efficiently to generate a charged microparticle mist. The discharge device 160 (the electrostatic atomization device 162) according to the eighth embodiment has the following advantage in addition to advantages (1) to (9) of the second embodiment.
(12) The discharge electrode 164 is formed by a member that produces a capillary phenomenon. In this structure, a liquid supplied from the liquid supplying unit (in the eighth embodiment, the tank 56, pump 57, and liquid supply passage 58) stably moves to the distal end 164a of the discharge electrode 164. Consequently, electrostatic atomization can be efficiently carried out.

The eighth embodiment described above may be modified as follows.

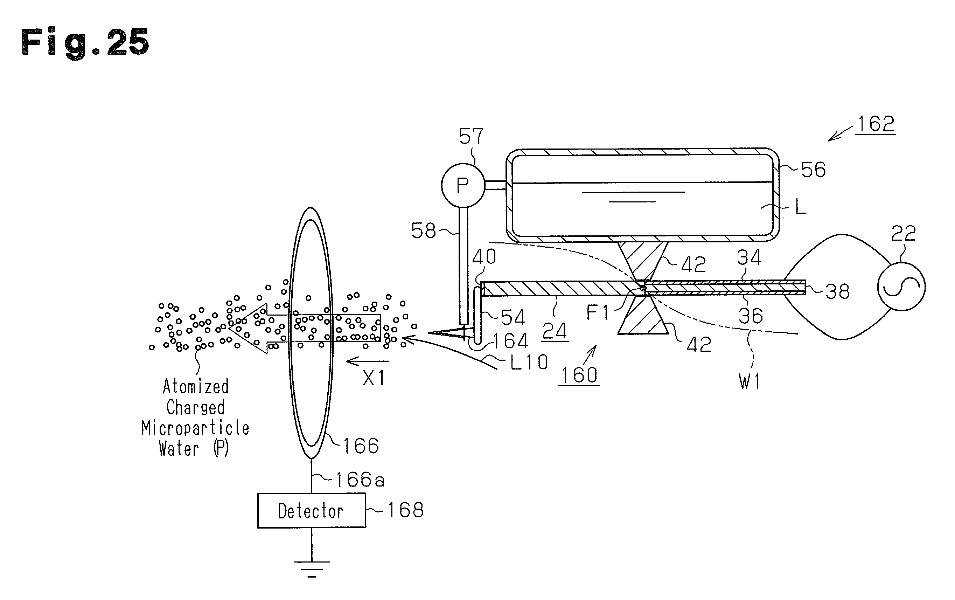

As shown in Fig. 25, a liquid supply detector 168 may be connected to a midpoint of a wire 166a that connects the opposing electrode 166 to ground. Since atomization occurs when a liquid is present at the discharge electrode 164, current flows to ground. The liquid supply detector 168 determines the need to supply the liquid to the discharge electrode 164 by detecting the current flowing to ground. In this structure, since an amount of the liquid supplied to the discharge electrode 164 can be controlled, a charged microparticle mist can be generated efficiently. This is also favorable in enhancing performance and convenience of the electrostatic atomization device 162.

The structures of the discharge devices according to the first and second embodiments as well as modifications thereof may be adopted for the discharge device 150 according to the eighth embodiment.

### Ninth Embodiment

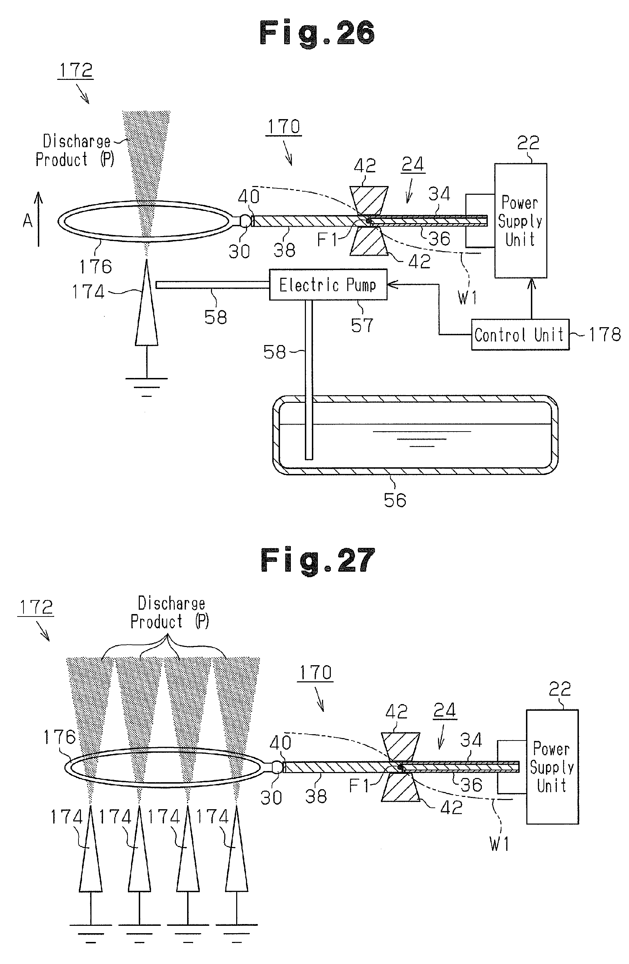

A discharge device 170 according to a ninth embodiment will now be described with reference to Fig. 26. As one example, the discharge device 170 according to the ninth embodiment is applied to an electrostatic atomization device 172. However, the discharge device 170 can also be applied to a metal microparticle generator. In the structure of the ninth embodiment, components similar to those in the first and second embodiments are denoted by the same reference characters. In Fig. 26, a fan 32 is not shown.

As shown in Fig. 26, the electrostatic atomization device 172 includes the discharge device 170 and a liquid supplying unit. In the same manner as in the second embodiment, the liquid supplying unit includes a tank 56, a pump 57, and a liquid supply passage 58 and supplies, for example, water as a liquid.

The discharge device 170 includes a power supply unit 22, a piezoelectric oscillator 24, a contact member 30 (an oscillation attenuation unit), a discharge electrode 174 (a first electrode), and an opposing electrode 176 (a second electrode). A control unit 178 controls the driving of the power supply unit 22 and pump 57.

In the ninth embodiment, the discharge electrode 174 is connected to ground as a reference potential. However, the discharge electrode 174 may be connected to a reference potential other than ground. The discharge electrode 174 has a pointed distal portion to obtain a high discharge efficiency. The opposing electrode 176 is ring-shaped and spaced apart from the discharge electrode 174. However, as shown in Fig. 13(a) described earlier, the opposing electrode 176 may be a reticulated electrode. In the ninth embodiment, the opposing electrode 176 is electrically connected to the piezoelectric oscillator 24 (a secondary electrode 40) via the contact member 30. Accordingly, a second voltage (increased AC voltage), which is obtained by increasing a first voltage (an AC voltage) from the power supply unit 22 with the piezoelectric oscillator 24, is supplied to the opposing electrode 176 via the contact member 30. In other words, in the ninth embodiment, the discharge electrode 174 and the piezoelectric oscillator 24 are arranged out of contact with each other.

In the ninth embodiment, when the second voltage, which is a high voltage, is applied to the opposing electrode 176 from the piezoelectric oscillator 24 via the contact member 30, corona discharging occurs between the discharge electrode 174 and the opposing electrode 176. Due to the discharging, water (liquid) supplied from the liquid supply passage 58 to the discharge electrode 174 is electrostatically atomized and a charged microparticle mist serving as a discharge product P is emitted in a predetermined direction (direction indicated by arrow A in Fig. 26). Here, the opposing electrode 176 applies directivity to the direction of emission of charged microparticle ions.

With the electrostatic atomization device 172, when liquid is not supplied from the liquid supply passage 58 (the liquid supplying unit) to the discharge electrode 174, active substances such as negative ions and ozone are generated as the discharge product P during the corona discharging. In other words, by applying the second voltage between the discharge electrode 174 and the opposing electrode 176 without using the liquid, the electrostatic atomization device 172 generates the discharge product P that obtains effects such as sterilization and deodorization.

When corona discharging occurs between the discharge electrode 174 and the opposing electrode 176 in a state in which liquid is supplied to the discharge electrode 174, electrostatic atomization is performed. In this case, in addition to effects such as deodorization and sterilization as described above, a charged microparticle mist that provides health and beauty effects is generated as the discharge product P.

The control unit 178 controls whether or not the liquid is supplied to the discharge electrode 174. The control unit 178 controls driving (starting and stopping) of the electric pump 57 of the liquid supplying unit while controlling driving of the power supply unit 22. The control unit 178 is formed by an integrated circuit such as a microcomputer. The control unit 178 controls starting and stopping of the electric pump 57 automatically or in accordance with a manual operation by a user.

The discharge device 170 (the electrostatic atomization device 172) according to the ninth embodiment has the advantages described below.
(1) The piezoelectric oscillator 24 arranged in the discharge device 170 is smaller than a winding transformer and is not subject to restraints on shapes and the like as in the case of a winding transformer. Thus, the discharge device 170 can be downsized as compared to when using a winding transformer.
(2) The second voltage (a high voltage) increased by the piezoelectric oscillator 24 is applied to the opposing electrode 176 to perform discharging between the discharge electrode 174 and the opposing electrode 176. Accordingly, the electrostatic atomization device 172 is capable of generating a large amount of charged microparticle mist using high voltage.
(3) The mechanical oscillation that occurs at the piezoelectric oscillator 24 is attenuated by the contact member 30 between the opposing electrode 176 and the piezoelectric oscillator 24. Accordingly, destabilization of the discharging resulting from the mechanical oscillation of the piezoelectric oscillator 24 is suppressed by the contact member 30.
(4) The piezoelectric oscillator 24 and the discharge electrode 174 are arranged out of contact with each other. Thus, the mechanical oscillation of the piezoelectric oscillator 24 is not transmitted to the discharge electrode 174. As a result, a charged microparticle mist can be efficiently and stably emitted from the discharge electrode 174.
(5) The contact member 30 is conductive and elastic. Thus, the electric connection between the opposing electrode 176 and the piezoelectric oscillator 24 and the attenuation of the oscillation of the piezoelectric oscillator 24 can be achieved with a single member.
   Consequently, the number of components is not significantly increased.
(6) The contact member 30 is in point contact with the piezoelectric oscillator 24. Thus, transmission of the oscillation of the piezoelectric oscillator 24 to the contact member 30 and, in turn, to the opposing electrode 176 is suppressed more reliably.
(7) Since the opposing electrode 176 is provided, a discharge between the discharge electrode 174 and the opposing electrode 176 can be performed efficiently and stably and, at the same time, a direction in which the charged microparticle mist is emitted can be given directivity.
(8) The discharge device 170 includes the fan 32 (not shown in Fig. 26) that blows air for transferring the charged microparticle mist. Accordingly, the charged microparticle mist can be efficiently transferred to a desired location to enable improvements in effects such as deodorization, sterilization, allergen inactivation, pesticide decomposition, and organic matter decomposition (stain removal), as well as health and beauty effects.
(9) The holding portion 42 that holds the piezoelectric oscillator 24 is arranged at a location coinciding with a node F1 of the mechanical oscillation of the piezoelectric oscillator 24. The holding portion 42 suppresses concentration of tensile stress and compressive stress resulting from the mechanical oscillation of the piezoelectric oscillator 24 at the node F1. Accordingly, damage of the piezoelectric oscillator 24 at the location of the node F1 can be suppressed.
(10) The control unit 178 switches the discharge electrode 174 between states supplied with and not supplied with liquid. In this structure, the user can freely select whether or not to generate a charged microparticle mist with the electrostatic atomization device 172.

### Tenth Embodiment

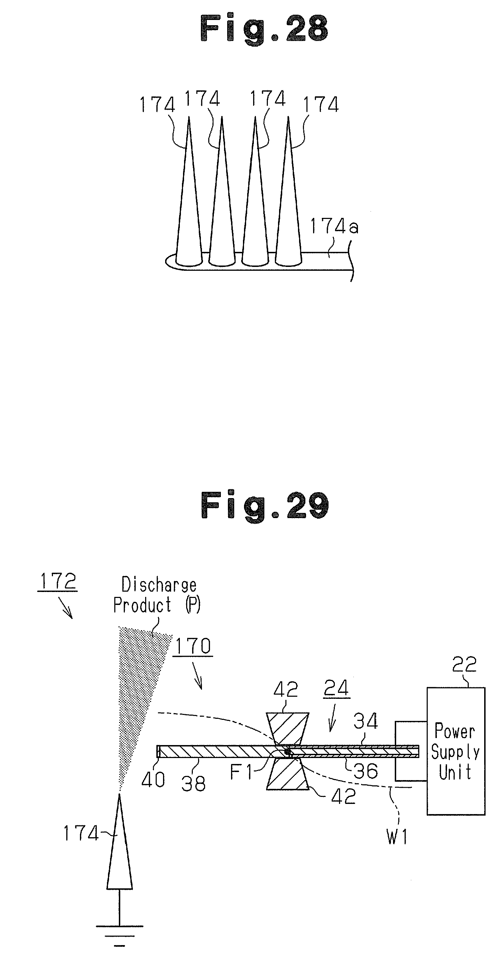

A discharge device 170 (electrostatic atomization device 172) according to a tenth embodiment will now be described with reference to Figs. 27 and 28. The discharge device 170 according to the tenth embodiment has the same structure as the ninth embodiment (Fig. 26) except for the user of a plurality of discharge electrodes 174. In the structure of the tenth embodiment, components similar to those in the ninth embodiment are denoted by the same reference characters.

As shown in Figs. 27 and 28, in the tenth embodiment, the discharge electrodes 174, each connected to ground (ground wire 31 a), are arranged to face a single opposing electrode 176.

The discharge device 170 (the electrostatic atomization device 172) according to the tenth embodiment has the following advantage in addition to advantages (1) to (10) of the ninth embodiment.
(11) The discharge device 170 includes the plurality of discharge electrodes 174.

Accordingly, a large amount of a discharge product P (negative ions and a charged microparticle mist) can be generated.

### Eleventh Embodiment

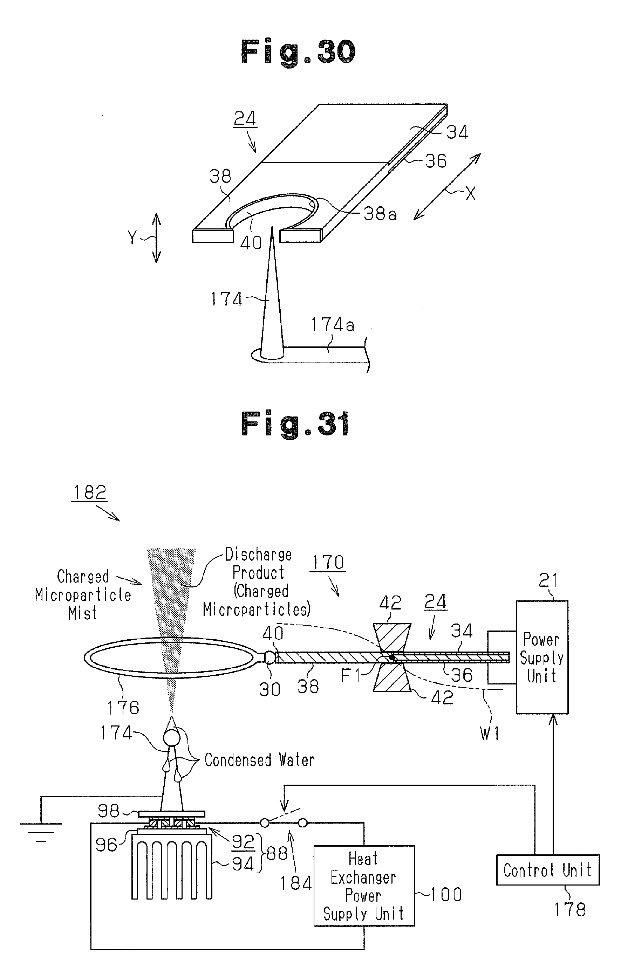

A discharge device 170 (electrostatic atomization device 172) according to an eleventh embodiment will now be described with reference to Figs. 29 and 30. The discharge device 170 according to the eleventh embodiment has the same structure as the ninth embodiment (Fig. 26) except in that the opposing electrode 176 serving as a second electrode is eliminated. In the structure of the eleventh embodiment, components similar to those in the ninth embodiment are denoted by the same reference characters.

As shown in Fig. 29, in the eleventh embodiment, the opposing electrode 176 such as that shown in Fig. 26 described above is omitted. Instead, a secondary electrode 40 arranged on a piezoelectric oscillator 24 has the function of an opposing electrode. In other words, instead of using the separate opposing electrode 176, discharging is performed by applying a second voltage (a high voltage) from the piezoelectric oscillator 24 between a discharge electrode 174 and the secondary electrode 40.

For example, as shown in Fig. 30, in the eleventh embodiment, a circular notch 38a is formed at an end portion of a piezoelectric body 38 located on the side opposite side to primary electrodes 34 and 36. The secondary electrode 40 is arranged on an end surface of the piezoelectric body 38 including the notch 38a. In other words, the secondary electrode 40 has the shape of ohm (Ω). The discharge electrode 174 faces the secondary electrode 40.

The discharge device 170 (the electrostatic atomization device 172) according to the eleventh embodiment has the advantages described below in addition to advantages (1), (4), and (8) to (10) of the ninth embodiment.
(12) The secondary electrode 40 of the piezoelectric oscillator 24 has the function of an opposing electrode. With this structure, when the second voltage (a high voltage) increased by the piezoelectric oscillator 24 is applied to the secondary electrode 40, discharging is performed between the discharge electrode 174 and the secondary electrode 40. Accordingly, even with this structure, the electrostatic atomization device 172 is capable of generating a large amount of charged microparticle mist using high voltage.
(13) A separate opposing electrode and the contact member 30 are not necessary. Thus, the number of components of the discharge device 170 can be reduced. Accordingly, downsizing of the discharge device 170 and reduction in cost can be achieved.
(14) The secondary electrode 40 functions as an opposing electrode. Thus, discharging can be performed efficiently and stably between the discharge electrode 174 and the secondary electrode 40 without having to use a separate opposing electrode. In addition, in the same manner as in the ninth embodiment, directivity can be applied to the emission direction of a charged microparticle mist.

### Twelfth Embodiment

An electrostatic atomization device 182 including a discharge device 170 according to a twelfth embodiment will now be described with reference to Fig. 31. The discharge device 170 according to the twelfth embodiment has the same structure as the ninth embodiment (Fig. 26). However, in the twelfth embodiment, a liquid supplying unit of the electrostatic atomization device 182 is configured by using a Peltier unit 88, which is similar to that used in the third embodiment. In the structure of the twelfth embodiment, components similar to those in the third and ninth embodiments are denoted by the same reference characters.

As shown in Fig. 31, a mechanical switch 184 is arranged on a wire for supplying power to the Peltier unit 88 from a heat exchanger power supply unit 100. The switch 184 is controlled by a control unit 178. In other words, the supply of power to a Peltier element 92 is controlled by controlling the activation and deactivation of the switch 184. This switches between states in which a discharge electrode 174 is supplied with and not supplied with liquid.

The twelfth embodiment has the following advantage in addition to advantages (1) to (10) of the ninth embodiment.
(15) The electrostatic atomization device 182 includes the Peltier unit 88 serving as a liquid supplying unit. Thus, there is no need to replenish a liquid storage tank or the like with a liquid.

The ninth to twelfth embodiments described above may be modified as follows.

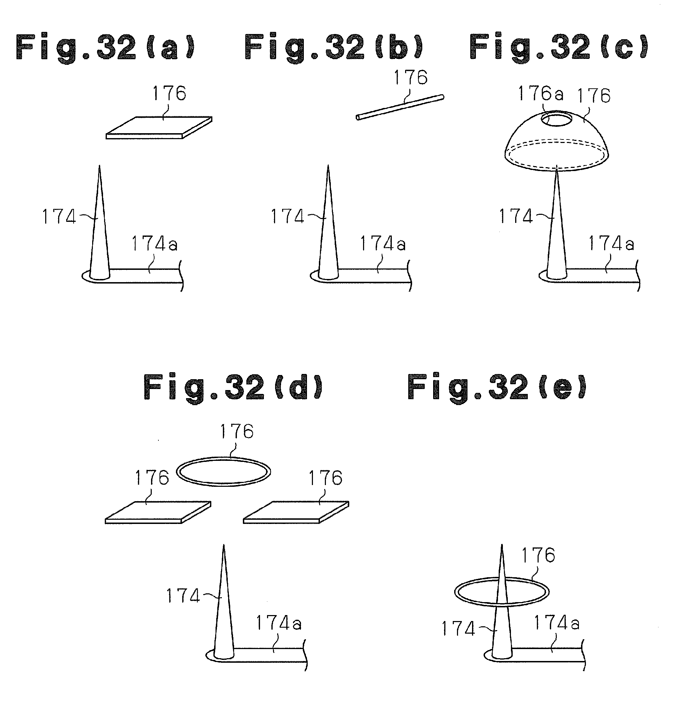

The shape, number, and location of the opposing electrode 176 may be changed as required. For example, as shown in Fig. 32(a), the opposing electrode 176 may be plate-shaped or tetragonal. Further, as shown in Fig. 32(b), the opposing electrode 176 may be rod-shaped. Alternatively, as shown in Fig. 32(c), the opposing electrode 176 may be a dome-shaped electrode having a semi-spherical shape covering the distal end of the discharge electrode 174. A through hole 176a extends through the center of the opposing electrode 176. Alternatively, as shown in Fig. 32(d), a plurality of opposing electrodes 176 may be provided for a single discharge electrode 174. In this case, the plurality of opposing electrodes 176 may have different shapes. Further, as shown in Fig. 32(e), the opposing electrode 174 may be arranged so that the discharge electrode 174 is arranged inside a ring-shaped opposing electrode 176.

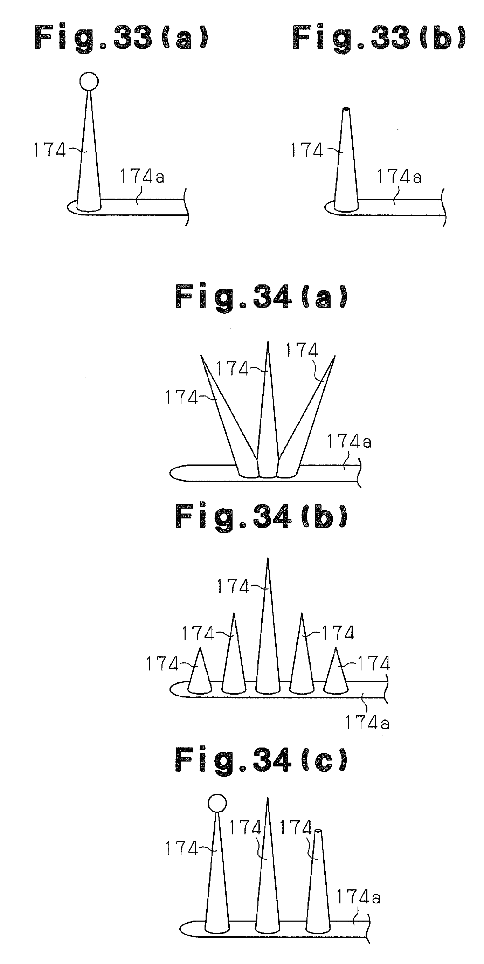

The shape, number, and location of the discharge electrode 174 may be changed as required. For example, as shown in Fig. 33(a), the distal end of the discharge electrode 174 may be spherical. In this structure, the amount of liquid retained by surface tension on the distal end of the discharge electrode 174 may be increased. As a result, the amount of charged microparticle mist can be increased. Alternatively, as shown in Fig. 33(b), the distal end of the discharge electrode 174 may be planar. In this structure, deterioration of the discharge electrode 174 due to the application of a high voltage can be suppressed. Alternatively, as shown in Fig. 34(a), a plurality of discharge electrodes 174 may be provided. In this case, the distal ends of the discharge electrodes 174 may face different directions. Alternatively, as shown in Fig. 34(b), the discharge electrodes 174 may have different lengths. Alternatively, as shown in Fig. 34(c), the distal ends of the discharge electrodes 174 may have different shapes.

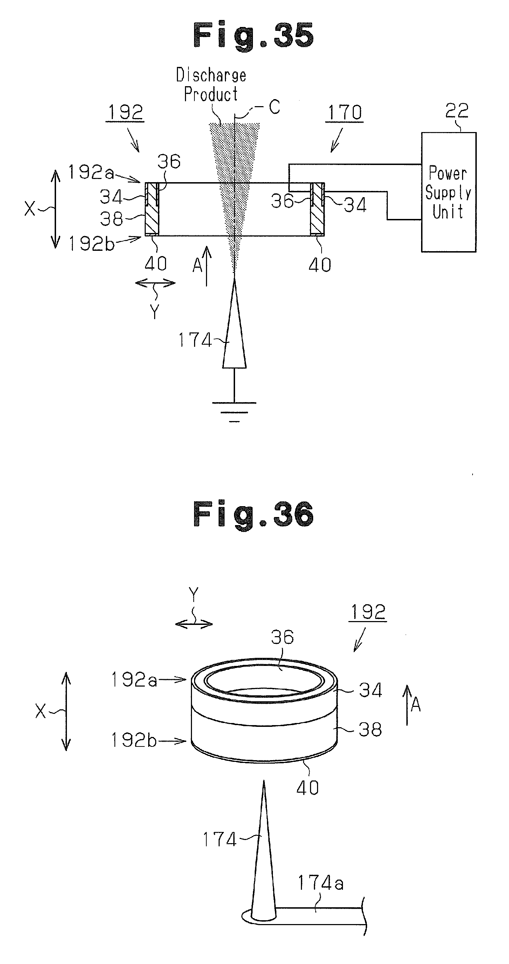

The piezoelectric oscillator 24 need not be tetragonal. For example, as shown in Figs. 35 and 36, the discharge device 170 may include an annular piezoelectric oscillator. In this case, a longitudinal direction X of the piezoelectric oscillator 192 is parallel to a center line C of the annular piezoelectric oscillator 192. With this structure, the ratio of a dimension in the longitudinal direction X to a dimension in a thickness direction Y of the piezoelectric oscillator 192 is set to be approximately equivalent to an amplification ratio between an input voltage (a first voltage) and an output voltage (a second voltage).

With such an annular piezoelectric oscillator 192, primary electrodes 34 and 36 are arranged on outer and inner circumferential surfaces in the thickness direction Y of a piezoelectric body 38 at one end portion 192a in a longitudinal direction X of the piezoelectric body 38. In addition, a secondary electrode 40 is arranged on an end surface facing the longitudinal direction X at the other end portion 192b in the longitudinal direction X of the piezoelectric body 38. In other words, the secondary electrode 40 is ring-shaped. In this structure, discharging can be performed between the secondary electrode 40 and the discharge electrode 174. In other words, the secondary electrode 40 also functions as an opposing electrode of the discharge electrode 174. Thus, a separate opposing electrode is not necessary.

The opposing electrode 176 may be connected to the piezoelectric oscillator 24 without being connected via the contact member 30. In other words, in the ninth, tenth, and twelfth embodiments (Figs. 26, 27, and 31), the opposing electrode 176 may be connected to the secondary electrode 40 of the piezoelectric oscillator 24 without using the contact member 30.

## Claims

1. A discharge device comprising:
a power supply unit that supplies a first voltage;
a piezoelectric oscillator that oscillates to increase the first voltage to a second voltage; and
a first electrode that performs discharging based on the second voltage to generate a discharge product,
wherein the first electrode and the piezoelectric oscillator are arranged out of contact with each other.

2. The discharge device according to claim 1, wherein
the first electrode is formed from a metallic material, and emits metal microparticles as the discharge product based on application of the second voltage.

3. The discharge device according to claim 2, wherein the first electrode contains platinum or zinc as a main component of the metallic material.

4. An electrostatic atomization device comprising:
the discharge device according to claim 1; and
a liquid supplying unit that supplies a liquid to the first electrode, wherein the first electrode electrostatically atomizes the liquid based on application of the second voltage to generate a charged atomized liquid as the discharge product, and
an oscillation attenuation unit arranged between the first electrode and the piezoelectric oscillator, wherein the oscillation attenuation unit electrically connects the first electrode and the piezoelectric oscillator.

5. The electrostatic atomization device according to claim 4, wherein the oscillation attenuation unit includes a contact member that is elastic and conductive.

6. The electrostatic atomization device according to claim 4, wherein the oscillation attenuation unit includes a contact member, which is conductive, and an elastic member, which is fixed to the contact member.

7. The electrostatic atomization device according to claim 4, wherein the oscillation attenuation unit is in point contact with and electrically connected to the piezoelectric oscillator.

8. The electrostatic atomization device according to claim 4, wherein the liquid supplying unit includes a Peltier unit that cools the first electrode via the oscillation attenuation unit and supplies the first electrode with condensed water as the liquid.

9. The electrostatic atomization device according to claim 4, wherein
the discharge device further comprises a second electrode which is arranged spaced apart from the first electrode, the second voltage being applied between the first electrode and the second electrode, and
the second electrode is equipped with a function that reduces ozone generated together with the charged atomized liquid.

10. The electrostatic atomization device according to claim 9, wherein the second electrode is formed from activated charcoal.

11. The electrostatic atomization device according to claim 9, wherein the second electrode is formed by an ozone decomposition catalyst.

12. The electrostatic atomization device according to claim 9, wherein
the discharge device further comprises a second power supply unit that is electrically connected to the second electrode, and
the second electrode includes a heating element capable of converting power, which is supplied from the second power supply unit, into heat.

13. The electrostatic atomization device according to claim 9, wherein the second electrode is formed to be lattice-shaped or honeycomb-shaped.

14. The electrostatic atomization device according to claim 9, wherein the discharge device further includes an ultraviolet irradiating unit that irradiates ultraviolet light toward ozone moving from the first electrode to the second electrode.

15. The electrostatic atomization device according to claim 4, wherein the first electrode includes a member that produces a capillary phenomenon, and a liquid supplied from the liquid supplying unit is moved on the first electrode by the capillary phenomenon.

16. The electrostatic atomization device according to claim 15, further comprising:
a second electrode arranged spaced apart from the first electrode and connected to a predetermined potential, wherein the second voltage is applied between the first electrode and the second electrode; and
a liquid supply detection unit connected to a wire that connects the second electrode to the predetermined potential, wherein the liquid supply detection unit detects the liquid supplied to the first electrode.

17. An electrostatic atomization device comprising;
the discharge device according to claim 1; and
a humidity environment formation unit arranged in a discharge zone in which the first electrode performs discharging based on the second voltage, wherein the humidity environment formation unit forms a humidity environment in the discharge zone,
wherein the discharge product is a charged atomized liquid, and the charged atomized liquid is generated by charging a liquid provided in the humidity environment with the discharging of the first electrode.

18. The electrostatic atomization device according to claim 17, wherein the humidity environment formation unit includes a Peltier unit that cools the discharge zone in a direction in which the charged atomized liquid is emitted to generate a condensed liquid.

19. The electrostatic atomization device according to claim 18, wherein the humidity environment formation unit further comprises a liquid reservoir which is arranged opened toward the discharge zone and which stores the condensed liquid generated by the Peltier unit.

20. The electrostatic atomization device according to claim 17, wherein
the humidity environment formation unit comprises:
a liquid supplying unit that supplies the liquid; and
a liquid reservoir which is arranged opened toward the discharge zone and which stores the liquid supplied from the liquid supplying unit.

21. The electrostatic atomization device according to claim 17, wherein the humidity environment formation unit includes a steam generator that supplies the liquid to the discharge zone in the form of steam.

22. The electrostatic atomization device according to claim 17, further comprising an oscillation attenuation unit arranged between the first electrode and the piezoelectric oscillator, wherein the oscillation attenuation unit electrically connects the first electrode and the piezoelectric oscillator.

23. The discharge device according to claim 1, further comprising a second electrode arranged spaced apart from the first electrode, wherein the second voltage is applied between the first electrode and the second electrode,
wherein the piezoelectric oscillator is out of contact with the first electrode and electrically connected to the second electrode.

24. The discharge device according to claim 23, wherein
the piezoelectric oscillator includes a primary electrode supplied with the first voltage, a piezoelectric body that oscillates in accordance with the first voltage, and a secondary electrode that outputs the second voltage, which has been increased from the first voltage by oscillation of the piezoelectric body, and
the secondary electrode of the piezoelectric oscillator functions as the second electrode.

25. An electrostatic atomization device comprising:
the discharge device according to claim 23; and
a liquid supplying unit that supplies a liquid to the first electrode, wherein the first electrode electrostatically atomizes the liquid based on application of the second voltage to generate a charged atomized liquid as the discharge product.

26. The electrostatic atomization device according to claim 25, wherein the liquid supplying unit includes a Peltier unit that cools the first electrode to supply the first electrode with condensed water as the liquid.

27. The electrostatic atomization device according to claim 25, further comprising a control unit that controls switching between states in which the first electrode is supplied with the liquid and cut off from the supply of the liquid.

28. The discharge device according to claim 1, further comprising an oscillation attenuation unit arranged between the first electrode and the piezoelectric oscillator, wherein the oscillation attenuation unit electrically connects the first electrode and the piezoelectric oscillator.

29. The discharge device according to claim 1, wherein the first electrode includes a distal portion formed to have a pointed shape.

30. The discharge device according to claim 1, wherein the first electrode is one of a plurality of first electrodes arranged in the discharge device, wherein the second voltage is applied to the plurality of first electrodes by the piezoelectric oscillator.

31. The discharge device according to claim 1, further comprising a second electrode arranged spaced apart from the first electrode, wherein the second voltage is applied between the first electrode and the second electrode.

32. The discharge device according to claim 1, further comprising an air blower that blows air for transferring the discharge product.

33. The discharge device according to claim 1, wherein
the piezoelectric oscillator includes a primary electrode supplied with the first voltage, a piezoelectric body that oscillates in accordance with the first voltage and includes at least a first node during oscillation, and a secondary electrode that outputs the second voltage, which has been increased from the first voltage by oscillation of the piezoelectric body,
wherein the piezoelectric body has a cross-sectional area that gradually becomes smaller from a location of the first node to the secondary electrode.

34. The discharge device according to claim 1, wherein
the piezoelectric oscillator includes a primary electrode supplied with the first voltage, a piezoelectric body that oscillates in accordance with the first voltage and has a first node of oscillation, and a secondary electrode that outputs the second voltage, which has been increased from the first voltage by oscillation of the piezoelectric body, and
the discharge device further comprises a holding portion that holds the piezoelectric oscillator at a location of the first node of the piezoelectric body.

35. The discharge device according to claim 34, wherein
the piezoelectric body has a second node of oscillation, and
the discharge device further comprises a protection portion that protects the piezoelectric oscillator at a location of the second node.

36. The discharge device according to claim 1, wherein the piezoelectric oscillator includes a primary electrode supplied with the first voltage, a piezoelectric body that oscillates in accordance with the first voltage, a secondary electrode that outputs the second voltage, which has been increased from the first voltage by oscillation of the piezoelectric body, and a protective material that covers the secondary electrode.
